(19) Europäisches Patentamt
European Patent Office
Office européen des brevets

(11) **EP 4 635 992 A1**

(12) **EUROPEAN PATENT APPLICATION**
published in accordance with Art. 153(4) EPC

(43) Date of publication:
**22.10.2025 Bulletin 2025/43**

(21) Application number: **23904045.4**

(22) Date of filing: **15.12.2023**

(51) International Patent Classification (IPC):
***C08F 210/16*** *(2006.01)* ***C08F 210/14*** *(2006.01)*
***C08J 5/18*** *(2006.01)*

(52) Cooperative Patent Classification (CPC):
**C08F 210/14; C08F 210/16; C08J 5/18**

(86) International application number:
**PCT/KR2023/020733**

(87) International publication number:
**WO 2024/128846 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.12.2022 KR 20220176237**
**13.12.2023 KR 20230181010**

(71) Applicant: **LG Chem, Ltd.**
**Yeongdeungpo-gu**
**Seoul 07336 (KR)**

(72) Inventors:
- **KIM, Hyun Tae**
**Daejeon 34122 (KR)**
- **KIM, Ryung Il**
**Daejeon 34122 (KR)**
- **KIM, Byung Seok**
**Daejeon 34122 (KR)**
- **LEE, Jeongkyu**
**Daejeon 34122 (KR)**
- **JUNG, Yoonchul**
**Daejeon 34122 (KR)**
- **HONG, Seok Bin**
**Daejeon 34122 (KR)**
- **JEON, Sangjin**
**Daejeon 34122 (KR)**
- **KIM, Seyoung**
**Daejeon 34122 (KR)**

(74) Representative: **Hoffmann Eitle**
**Patent- und Rechtsanwälte PartmbB**
**Arabellastraße 30**
**81925 München (DE)**

(54) **POLYETHYLENE AND FILM COMPRISING SAME**

(57) Provided are a polyethylene that exhibits transparency and dart drop impact strength properties along with excellent processability, and can be down-gauged when producing a film, and a film including the same.

【FIG. 1】

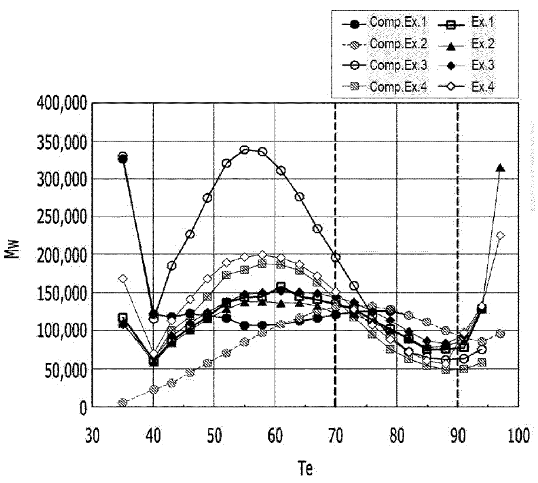


EP 4 635 992 A1

## Description

[TECHNICAL FIELD]

Cross-reference to Related Application

The present application is based on, and claims priority from, Korean Patent Application Nos. 10-2022-0176237 and 10-2023-0181010, filed on December 15, 2022 and December 13, 2023, respectively, the disclosures of which are hereby incorporated by reference herein in their entirety.

The present invention relates to a polyethylene that exhibits transparency and dart drop impact strength properties along with excellent processability, and can be down-gauged during film production, and a film including the same.

[BACKGROUND ART]

Linear low-density polyethylene (LLDPE), which is prepared by copolymerization of ethylene and alpha olefin at a low pressure using a polymerization catalyst, is a resin that has a narrow molecular weight distribution and short chain branches of a certain length and does not have long chain branches.

A linear low-density polyethylene film has high breaking strength and elongation, superior film processability and transparency, and excellent tear strength and dart drop impact strength, as well as general properties of polyethylene, and therefore, the use is increasing in food packaging and industrial films such as industrial lamination films, heavy duty films, and stretch wrap films, to which application of the existing low-density polyethylene or high-density polyethylene is difficult.

It is known that the dart drop impact strength of linear low-density polyethylene generally increases as its density decreases. However, when a lot of comonomers are used to prepare low-density polyethylene, there are problems that the frequency of fouling increases during a slurry polymerization process, and when producing a film including the same, the use of anti-blocking agent must be increased due to a stickiness phenomenon. There is also a problem of a decrease in bulk density due to process instability during the production or due to a decrease in the morphology characteristics of the produced polyethylene.

Recently, a demand for down-gauging is increasing due to sustainability and D4R (Design For Recyclability) market trends, and accordingly, a demand for linear low-density polyethylene with excellent processability and dart drop impact strength is also increasing.

Dart drop impact strength is a very important mechanical property that determines the resistance of a resin to various impacts.

Linear low-density polyethylene has excellent mechanical properties; however, it has drawbacks of poor processability for blown film production and reduced transparency. The blown film is a film prepared by blowing air into molten plastic to inflate, and is also named an inflation film.

Generally, linear low-density polyethylene exhibits improved transparency and increased drop impact strength as its density decreases. However, when a lot of alpha olefin comonomers are used to prepare low-density polyethylene, there are problems that fouling can be frequently generated during a slurry polymerization process, and when producing a film including the same, the use of anti-blocking agent must be increased due to the stickiness phenomenon. There is also a problem of a decrease in bulk density due to process instability during the production or due to a decrease in the morphology characteristics of the produced polyethylene. Therefore, in the slurry polymerization process, products with a density of 0.915 g/cm$^3$ or more are mainly produced.

Accordingly, it is necessary to develop a polyethylene that is able to realize excellent mechanical properties such as dart drop impact strength, etc., and transparency along with excellent processability while having a density of 0.915 g/cm$^3$ or more.

[DETAILED DESCRIPTION OF THE INVENTION]

[TECHNICAL PROBLEM]

In order to solve the problems of the prior art, there is provided a polyethylene that can be down-gauged and has improved transparency and dart drop impact strength properties along with excellent processability.

There is also provided a film that exhibits excellent processability and transparency and dart drop impact strength properties by including the polyethylene.

[TECHNICAL SOLUTION]

According to the present invention, there is provided a polyethylene, in which when the polyethylene is subjected to temperature rising elution fractionation and Fourier transform infrared spectroscopy, an absolute value of a slope, a in a first-order linear relationship y=ax+b which is derived from a change curve of the number of SCB (short chain branch) according to elution temperature is 0.5 to 0.6 and a density is 0.916 $g/cm^3$ to 0.920 $g/cm^3$, as measured according to the ASTM D1505 standard.

According to the present invention, there is also provided a film including the polyethylene.

[ADVANTAGEOUS EFFECTS]

A polyethylene according to the present invention exhibits transparency and dart drop impact strength properties along with excellent processability and can be down-gauged during film production. Accordingly, it can be useful as a film for foods, agriculture, and general industrial use.

[BRIEF DESCRIPTION OF THE DRAWINGS]

FIG. 1 shows a graph showing a relationship between an elution temperature (Te) (°C) and a weight average molecular weight (Mw) (g/mol) of each eluted polymer from the results of cross fractionation chromatography (CFC) analysis for polyethylenes of Examples 1 to 4 and Comparative Examples 1 to 4;

FIG. 2A shows a graph showing a relationship between the elution temperature (Te) (°C) and the number of SCB ($CH_3$/1,000C) from the results of CFC analysis for the polyethylenes of Examples 1 to 4;

FIG. 2B shows a graph showing a relationship between the elution temperature (Te) (°C) and the number of SCB ($CH_3$/1,000C) from the results of CFC analysis for the polyethylenes of Comparative Examples 1 to 4;

FIG. 3 shows a plot of relaxation time spectra of the polyethylenes of Examples 1 to 4 and Comparative Examples 1 to 4 as measured using a rotational rheometer (ARES-G2 *rheometer,* manufactured by TA Instruments);

FIGS. 4 to 11 show deconvolution plots of the relaxation time spectra of Examples 1 to 4 and Comparative Examples 1 to 4 of FIG. 3, respectively;

FIG. 12 shows a graph showing a relationship between a loss modulus (G") and a storage modulus (G'), obtained from the results of measuring rheological properties for the polyethylenes of Examples 1 to 4 and Comparative Examples 1 to 4; and

FIG. 13 shows a graph showing a relationship between a storage modulus (G') and a complex viscosity ($\eta^*$), obtained from the results of measuring rheological properties for the polyethylenes of Examples 1 to 4 and Comparative Examples 1 to 4.

[DETAILED DESCRIPTION OF THE EMBODIMENTS]

As used herein, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression can include the plural expression unless it is differently expressed contextually. It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

In addition, throughout this specification, the term "polyethylene" or "ethylene (co)polymer" is a concept that includes both an ethylene homopolymer and/or a copolymer of ethylene and alpha-olefin.

The present invention can be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a polyethylene of the present invention and a film including the same will be described in detail.

Specifically, when the polyethylene according to the present invention is subjected to temperature rising elution fractionation and Fourier transform infrared spectroscopy, an absolute value of a slope, a in a first-order linear relationship y=ax+b which is derived from a change curve of the number of SCB (branches/1,000C) according to elution temperature (Te) (°C) is 0.5 to 0.6, and

a density is 0.916 g/cm$^3$ to 0.920 g/cm$^3$, as measured according to the ASTM D1505 standard.

As used herein, the SCB (short chain branch) refers to a short chain, specifically, a chain of 2 to 7 carbon atoms which is linked in the form of a branch to the main chain of a polyethylene. SCB is a short chain branch which is commonly produced when alpha-olefin having 4 or more carbon atoms such as 1-butene, 1-hexene, or 1-octene is used as a comonomer, and its content can be proportional to the content of $\alpha$-olefin monomer contained in the polymer chains. The SCB content refers to the number of chain branches having 2 to 7 carbon atoms per 1,000 carbons (unit: branches/1,000C or $CH_3$/1,000C), and can be calculated by analysis using proton nuclear magnetic resonance (1H-NMR) or Fourier transform infrared spectroscopy (FT-IR). In the present invention, the SCB content was calculated by FT-IR analysis, and a detailed analysis method will be described in Experimental Example below.

The polyethylene is a semi-crystalline polymer, and can include crystalline and amorphous regions. In the crystalline region, the polymer chain including an ethylene repeating unit or an alpha olefin repeating unit is folded to form a bundle, thereby forming a crystalline block (or a segment) in the form of lamella.

Such a crystalline block in the form of lamella affect the physical properties of polyethylene, particularly, drop impact strength and transparency, and SCB is advantageous for forming such a lamella. Accordingly, as the SCB content in polyethylene is higher and the lamella exhibits more multi-modal distribution, the polyethylene exhibits more improved drop impact strength while maintaining transparency, as compared to existing polyethylene with the same density.

In the present invention, a metallocene catalyst with a specific structure is used to prepare a polyethylene having the optimally controlled SCB content or distribution and molecular weight according to crystallinity, and therefore, the prepared polyethylene exhibits improved transparency and dart drop impact strength properties along with excellent processability, and as a result, down-gauging is possible during film production.

Meanwhile, in the temperature rising elution fractionation (TREF) analysis, the width of the TREF curve and the elution temperature indicate the uniformity of the SCB distribution. With regard to polyethylenes with the same density, a narrower TREF curve means a more uniform SCB distribution because polymer chains with different molecular weights have similar amounts of SCBs.

Accordingly, in the present invention, the relationship between the elution temperature and the number of SCBs, and the effect of this relationship on the dart drop impact strength and transparency of polyethylene were identified through TREF and FT-IR analysis, which was defined by the absolute value of the slope a in the first-order linear relationship y=ax+b which is derived from the change curve of the number of SCBs according to the elution temperature.

Specifically, TREF and FT-IR analyses were performed on polyethylene, and the analysis results were plotted using the elution temperature (Te) (°C) on the x-axis and the number of SCBs (the number of chain branches having 2 to 7 carbon atoms per 1,000 carbon atoms, unit: branches/1,000C (or $CH_3$/1,000C)) on the y-axis, and the resulting change curve of the number of SCBs according to the elution temperature was subjected to curve fitting to derive the first-order linear relationship y=ax+b, thereby obtaining the slope (a) defined above and its absolute value.

The absolute value of the slope in the change curve of the number of SCBs according to the elution temperature represents the distribution of short-chain branch (SCBD) of polyethylene, and through this, the dart drop impact strength property of polyethylene can be predicted. Specifically, the smaller absolute value of the slope derived from the change curve of the number of SCBs according to the elution temperature means the lower SCB content in the low-crystalline region, and the larger absolute value of the slope means the higher SCB content in the low-crystalline region and the lower SCB content in the high-crystalline region.

Accordingly, in the present invention, excellent impact strength property was realized by increasing the SCB content in the low-crystalline region, and improved transparency was realized by controlling the SCB content and the molecular weight in the high-crystalline region.

Traditionally, the BOCD structure was defined and optimized as the BOCD index, because polyethylene showed excellent impact strength property when it has a broad orthogonal co-monomer distribution (BOCD) structure which means a high SCB content in a high molecular weight region. However, the BOCD index did not take into account crystallinity of the polymer, and the molecular weight-based SCB distribution was not suitable for use as an index for determining impact strength and transparency. In contrast, the absolute value of the slope in the change curve of the number of SCBs according to elution temperature, defined in the present invention, can represent the intrinsic physical properties of the polymer depending on the catalyst structure, reaction process conditions, film formation conditions, etc., and thus the SCBD characteristics of polyethylene are defined, which are more advantageous in predicting the dart drop impact strength, and furthermore, transparency.

With regard to the polyethylene according to the present invention, the absolute value of the slope derived from the change curve of the number of SCBs according to elution temperature is 0.5 to 0.6, and accordingly, it can exhibit excellent dart drop impact strength and transparency. More specifically, the absolute value is 0.5 or more, or 0.52 or more, or 0.54 or more, or 0.541 or more, or 0.545 or more, and 0.6 or less, or 0.595 or less, or 0.593 or less, or 0.56 or less.

Meanwhile, in the present invention, the TREF analysis of polyethylene can be performed using PolymerChar's TREF device and 1,2,4-trichlorobenzene as a solvent in the range of 35°C to 120°C. In detail, 32 mg of a polyethylene sample is dissolved in 8 mL of 1,2,4-trichlorobenzene solvent at 160°C for 90 minutes and then stabilized at 140°C for 20

minutes. The solution is introduced into a TREF column, and then cooled from 140°C to 35°C at a cooling rate of 0.5°C/min, and maintained for 15 minutes. Thereafter, while heating from 35°C to 120°C at a rate of 1°C/min, the solvent 1,2,4-trichlorobenzene is applied to the column at a flow rate of 0.2 mL/min to measure the concentrations of the eluted polymer fractions. From the results of the concentration measurement, a TREF analysis graph is derived using the elution temperature (Te) (°C) on the x-axis and the weight average molecular weight (Mw) (g/mol) of the polymer on the y-axis, and the elution temperature (Te) (°C) corresponding to the highest point of the peak can be identified.

Further, in the present invention, the number of SCBs (the content of chain branches having 2 to 7 carbon atoms per 1000 carbons, branches/1000C) of molecules eluted at each temperature can be identified by analyzing the polyethylene with FT-IR. FT-IR employed in the SCB measurement can be performed, for example, using PerkinElmer Spectrum 100 instrument containing a DTGS detector under conditions of a test temperature of 100°C to 200°C, specifically, 160°C, a wavenumber of 2000 $cm^{-1}$ to 4000 $cm^{-1}$, specifically, 2700 $cm^{-1}$ to 3000 $cm^{-1}$, the number of scanning of 1 to 20, and a resolution of 1 $cm^{-1}$ to 10 $cm^{-1}$.

In the present invention, the analysis methods and conditions for TREF analysis and FT-IR analysis, the method of obtaining the change curve of the number of SCBs according to elution temperature (Te) (°C) and the first-order linear relationship therefrom will be described in more detail in Experimental Example below.

Further, the polyethylene according to the present invention further satisfies the following requirements of (a1) to (a3) in the TREF analysis:

(a1) a weight average molecular weight (Mw) of a low crystalline polymer fraction (M1) eluted at an elution temperature of 35°C to 70°C: 110,000 g/mol or more, more specifically, 110,000 g/mol or more, or 115,000 g/mol or more, or 117,000 g/mol or more, or 120,000 g/mol or more, and 170,000 g/mol or less, or 165,000 g/mol or less, or 163,000 g/mol or less, or 130,000 g/mol or less;

(a2) a weight average molecular weight (Mw) of a highly crystalline polymer fraction (M3) eluted at an elution temperature of 90°C or higher: 110,000 g/mol or more, more specifically, 110,000 g/mol or more, or 130,000 g/mol or more, or 150,000 g/mol or more, or 151,000 g/mol or more, or 160,000 g/mol or more, and 200,000 g/mol or less, or 190,000 g/mol or less, or 186,000 g/mol or less, or 180,000 g/mol or less; and

(a3) a ratio ($M3_{Mw}/M1_{Mw}$) of the weight average molecular weight of M3 to the weight average molecular weight of M1: 0.9 or more, more specifically, 0.9 or more, or 0.92 or more, or 0.925 or more, or 0.928 or more, or 0.93 or more, or 1 or more, and 1.7 or less, or 1.6 or less, or 1.55 or less, or 1.52 or less, or 1.515 or less, or 1.51 or less.

The above requirements of (a1) to (a3) mean that the polyethylene has the bimodal crystal distribution characteristics of different molecular weight distributions. The polyethylene according to the present invention exhibits a wide polydispersity and a bimodal relaxation time spectrum by controlling the molecular weight distribution according to such a crystal distribution, and as a result, it can exhibit excellent dart drop impact strength property as well as improved haze property. The molecular weight of M1 refers to the molecular weight of the polymer fraction in the low-crystalline region, and is related to tie-molecule formation, thereby affecting the impact strength. Further, the molecular weight of M3 refers to the molecular weight of the polymer fraction in the high-crystalline region, and is related to crystallinity during film formation, thereby affecting transparency of the film. Accordingly, haze and impact strength properties can be improved at the same time by adjusting the ratio of M3 to M1.

Furthermore, when the polyethylene according to the present invention is subjected to TREF analysis, a weight average molecular weight (Mw) of a medium crystalline polymer fraction (M2) eluted at an elution temperature of 70°C to 90°C can be 120,000 g/mol or less, more specifically, 120,000 g/mol or less, or 110,000 g/mol or less, or 108,000 g/mol or less, or 107,000 g/mol or less, or 100,000 g/mol or less, and 80,000 g/mol or more, or 85,000 g/mol or more, or 86,000 g/mol or more, or 95,000 g/mol or more.

In the present invention, the weight average molecular weights (Mws) of fractions eluted at each temperature in the TREF analysis can be measured through GPC analysis. Specifically, the fractions eluted at each temperature in the TREF analysis are transferred to a GPC Column (Polymer Laboratories PLgel MIX-B 300 mm-length column) of GPC instrument (Waters PL-GPC220), and analyzed under conditions of a measurement temperature of 100°C to 200°C, specifically, 160°C, a solvent of 1,2,4-trichlorobenzene, and a flow rate of 0.1 mL/min to 10 mL/min, specifically, 1 mL/min, wherein the samples at a concentration of 1 mg/10mL to 20 mg/10mL, specifically, 10 mg/10mL can be applied in an amount of 100 μL to 300 μL, specifically, 200 μL. The Mw value is derived using a calibration curve obtained using polystyrene standard specimens, wherein the weight average molecular weights of the polystyrene standard specimens can be, for example, 9 kinds of 2000 g/mol, 10000 g/mol, 30000 g/mol, 70000 g/mol, 200000 g/mol, 700000 g/mol, 2000000 g/mol, 4000000 g/mol, and 10000000 g/mol.

The GPC analysis method and conditions of the present invention will be described in more detail in Experimental Example below.

Further, when the polyethylene according to the present invention is subjected to relaxation time spectrum analysis, it exhibits a bimodal crystal distribution in a graph with a relaxation time (τ)(s) on the x-axis and τH(τ)/η0 on the y-axis, wherein s represents the time unit 'sec'.

Such a crystal distribution means that the high molecular weight polymer exhibiting a long relaxation time exists in a higher content, as compared to a polyethylene, which exhibits a unimodal crystal distribution. Accordingly, it is easy to control the crystal growth rate, resulting in excellent dart drop impact strength and transparency.

Further, when the polyethylene is subjected to relaxation time spectrum analysis, it has a relaxation spectrum index (RSI) of 29 to 43, which is calculated according to Equation 1 below.

[Equation 1]

$$RSI = \frac{G_{II}}{G_I}$$

in Equation 1, $G_I$ and $G_{II}$ are calculated according to Equations (i) and (ii) below, respectively,

$$G_I = \sum_{i=1}^{N} G_i \Big/ \sum_{i=1}^{N} \frac{G_i}{\tau_i} \qquad \text{(i)}$$

$$G_{II} = \sum_{i=1}^{N} G_i \tau_i \Big/ \sum_{i=1}^{N} G_i \qquad \text{(ii)}$$

in Equations (i) and (ii), N represents the number of modes in a mode distribution of the relaxation time spectrum, $G_i$ represents a modulus (dyne/cm$^2$) corresponding to the relaxation time, and $\tau_i$ represents the relaxation time (s).

Specifically, $G_I$ and $G_{II}$ in Equation 1 are first and second moments, respectively, in the mode distribution of the relaxation time spectrum. When the mode distribution of the relaxation time spectrum is calculated, the first and second moments of the distribution similar to Mn and Mw can be calculated.

The relaxation time spectrum is calculated from the result of an experiment to measure a material constant.

Specifically, a shear strain is applied to the polyethylene and a response to the strain is measured using a rheometer, and then, based on the response of polyethylene and the structure and shape of the used rheometer, a relaxation modulus G(t) and a dynamic modulus (storage modulus (G'(ω))) and a loss modulus (G"(ω))) can be determined as a function of time (t) or frequency (ω), respectively (see J. M. Dealy and K. F. Wissbrun, Melt Rheology and Its Role in Plastics Processing, Van Nostrand Reinhold, 1990, pp. 269-297).

The relaxation time spectrum can be expressed in a continuous or discontinuous form. G'(ω) and G"(ω) are obtained, and then analyzed using spectral factors. The continuous relaxation time spectrum is calculated through integration as follows, and the discrete relaxation time spectrum (or discontinuous relaxation time spectrum) is calculated by dividing it according to the number of divisions specified as follows, that is, the number of modes (N) (Seungjoon Park et al., The Korean J. of Rheology, 1996(8) 103-118).

<Continuous relaxation time spectrum, H(t)>

$$G'(\omega) = \int_{-\infty}^{+\infty} H(\tau) \frac{(\omega\tau_i)^2}{1 + (\omega\tau_i)^2} \, \mathrm{d}ln\tau \qquad (1)$$

$$G"(\omega) = \int_{-\infty}^{+\infty} H(\tau) \frac{\omega\tau_i}{1 + (\omega\tau_i)^2}\, \mathrm{d}ln\tau \quad (2)$$

<Discrete relaxation time spectrum, $G_i$>

$$G'(\omega) = \sum_i^N G_i \frac{(\omega\tau_i)^2}{1 + (\omega\tau_i)^2} \quad (3)$$

$$G"(\omega) = \sum_i^N G_i \frac{\omega\tau_i}{1 + (\omega\tau_i)^2} \quad (4)$$

in Equations (1) to (4), G'(ω) represents the storage modulus and G"(ω) represents the loss modulus.

Further, H(τ) represents the relaxation time spectrum, ω represents the frequency (rad/s), τ represents the continuous relaxation time (s), and $\tau_i$ represents the discrete relaxation time (s).

Further, N represents the number of modes, and $G_i$ represents the modulus (dyne/$cm^2$) corresponding to the relaxation time.

The mode distribution of the relaxation spectrum can also be calculated using a software such as IRIS rheological software (manufactured by IRIS Development). Once the mode distribution in the relaxation spectrum is calculated, the first and second moments of the distribution (they are similar to Mn and Mw which are first and second moments of the molecular weight distribution) can be calculated as follows.

$$G_I = \sum_{\mathrm{i=1}}^{\mathrm{N}} G_{\mathrm{i}} \Big/ \sum_{\mathrm{i=1}}^{\mathrm{N}} \frac{G_{\mathrm{i}}}{\tau_{\mathrm{i}}} \quad (i)$$

$$G_{II} = \sum_{\mathrm{i=1}}^{\mathrm{N}} G_{\mathrm{i}}\tau_{\mathrm{i}} \Big/ \sum_{\mathrm{i=1}}^{\mathrm{N}} G_{\mathrm{i}} \quad (ii)$$

in Equations (i) and (ii), N represents the number of modes in the mode distribution of the relaxation time spectrum, $G_i$ represents the modulus (dyne/$cm^2$) corresponding to the relaxation time, and $\tau_i$ represents the relaxation time (s).

In the present invention, the RSI of polyethylene can be obtained by a method proposed by Wasserman (S,.H.Wassermna ANTEC 1997, 55, 1129), and specifically, can be obtained using the $G_I$ and $G_{II}$ values calculated in Equations (i) and (ii) according to Equation 1.

The elasticity of a fluid is related to the second moment in the mode distribution of the relaxation spectrum, and accordingly, RSI is also a measure of elasticity.

RSI is sensitive to parameters such as a molecular weight distribution, a molecular weight, and a long chain branch of a polymer. As the RSI value is higher, the relaxation time distribution of polyethylene is wider, resulting in excellent processability and haze property. However, when RSI is too high, it means that the elasticity of the polymer is very high, and bubble stability decreases during down-gauging, or impact strength decreases or melt fracture occurs due to increased orientation during film formation, and as result, it is apprehended that the haze property can deteriorate. In addition, when RSI is too low, the stability during film processing can decrease due to the low elasticity of the polymer, or the film smoothness can decrease due to an increase in film thickness deviation, and as a result, it is apprehended that the

impact strength can deteriorate.

The polyethylene according to the present invention has a relaxation spectrum index (RSI) of 29 or more, or 29.1 or more, or 29.15 or more, or 29.19 or more, or 30 or more, and 43 or less, or 42.5 or less, or 42.1 or less, or 42.01 or less, or 40 or less. As the polyethylene has an RSI in this range, it can exhibit excellent processability and haze property.

Further, when the polyethylene according to the present invention is subjected to relaxation time spectrum analysis, a weight average relaxation time ($\tau_w$) calculated according to Equation 2 below is 1.2 seconds to 10 seconds.

[Equation 2]

$$\tau_w = \frac{\sum_i^N G_i \tau_i^2}{\sum_i^N G_i \tau_i}$$

In Equation 2, N represents the number of modes, $G_i$ represents the modulus (dyne/$cm^2$) corresponding to the relaxation time, and $\tau_i$ represents the relaxation time (s).

As the weight average relaxation time ($\tau_w$) satisfies the above-mentioned range of requirements, the presence of high molecular weight polymer makes it easier to control the crystal speed during film formation, and as a result, excellent haze properties can be exhibited. More specifically, the weight average relaxation time is 1.2 seconds or more, or 1.22 seconds or more, 10 seconds or less, or 9.8 seconds or less.

Further, a zero shear viscosity ($\eta_0$) can be calculated using the relaxation time spectrum. Specifically, the polyethylene has a zero shear viscosity ($\eta_0$) of 9,000 Pa·s or more and 13,000 Pa·s or less, calculated according to Equation 3 below from the results of relaxation time spectrum analysis.

[Equation 3]

$$\eta_0 = \sum_i^N G_i \tau_i$$

In Equation 3, N represents the number of modes, $G_i$ represents the modulus (dyne/$cm^2$) corresponding to the relaxation time, and $\tau_i$ represents the relaxation time (s).

More specifically, the zero shear viscosity is 9,000 Pa·s or more, or 9,100 Pa·s or more, or 9,200 Pa·s or more, or 9,500 Pa·s or more, and 13,000 Pa·s or less, or 12,800 Pa·s or less, or 12,650 Pa·s or less, or 12,000 Pa·s or less.

Further, when the polyethylene is subjected to relaxation time spectrum analysis, the highest peak of the relaxation time spectrum exists at a relaxation time ($\tau$) of 0.05 second to 1 second.

The presence of the highest peak means that the relaxation time is long. More specifically, the highest peak of the relaxation time spectrum exists at 0.05 seconds or more, or 0.09 seconds or more, or 0.098 seconds or more, or 0.1 second or more, and 1 second or less, or 0.5 seconds or less, or 0.3 seconds or less, or 0.2 seconds or less, or 0.174 or less.

Further, when the polyethylene is subjected to the relaxation time spectrum analysis, a full width at half-maximum (FWHM) of a peak that appears at a relaxation time ($\tau$) of 1 second to 10 seconds, i.e., FWHM of a peak at $1s \leq \tau \leq 10s$ is 0.95 to 2.0, and a ratio of the area of the peak that appears at a relaxation time ($\tau$) of 1 second to 10 seconds to the total peak area of the relaxation time spectrum (=the area of the peak at $1s \leq \tau \leq 10s$/the total peak area of the relaxation time spectrum) is 14% to 40%.

More specifically, FWHM of the peak that appears at a relaxation time ($\tau$) of 1 second to 10 seconds is 0.95 or more, or 0.99 or more, or 1.0 or more, or 1.22 or more, and 2.0 or less, or 1.95 or less, or 1.9 or less, or 1.5 or less, or 1.29 or less. Further, the ratio of the area of the peak to the total peak area of the relaxation time spectrum is 14% or more, or 14.2% or more, and 40% or less, or 35% or less.

The peak that appears at a relaxation time ($\tau$) of 1 second to 10 seconds means the presence of a polymer with a long relaxation time.

Further, the influence on the processability and haze property of the polyethylene can be predicted from the FWHM of the peak and the ratio of the peak area. When the FWHM of the peak is too low, it means that the relaxation time distribution is very narrow, and when it is too high, it means that the relaxation time distribution is very wide. Further, when the ratio of the peak area to the total peak area of the relaxation time spectrum (the area of the peak at $1s \leq \tau \leq 10s$/the total peak area of the relaxation time spectrum) is too low or 0, this means that the content of a polymer with a long relaxation

time is low or the polymer does not exist, and when it is too high, it means that the content of the polymer with a long relaxation time is high. RSI is determined depending on the presence and distribution characteristics of the peak, which ultimately affects the bubble stability due to crystallization speed and elasticity during film formation. Further, since RSI affects the monodispersity of polymer melting, it also affects processability. The polyethylene according to the present invention can exhibit excellent processability and haze property, as it satisfies the above-mentioned FWHM of the peak and the ratio of the peak area.

Further, when the polyethylene according to the present invention is subjected to successive self-nucleation and annealing (SSA) analysis, it satisfies the following requirements of (c1) to (c3):

(c1) f1(<100°C) (a ratio of the peak area at a melting temperature of lower than 100°C to the total peak area): 0.35 to 0.41, more specifically, 0.35 or more, or 0.36 or more, or 0.365 or more, or 0.3673 or more, and 0.41 or less, or 0.408 or less, or 0.4065 or less, or 0.4063 or less;

(c2) f2(100-120°C) (a ratio of the peak area at a melting temperature of 100°C to 120°C to the total peak area): 0.30 to 0.38, more specifically, 0.30 or more, or 0.305 or more, or 0.307 or more, and 0.38 or less, or 0.35 or less, or 0.34 or less, or 0.3353 or less; and

(c3) f3(>120°C) (a ratio of the peak area at a melting temperature of higher than 120°C to the total peak area): 0.24 to 0.33, more specifically, 0.24 or more, or 0.25 or more, or 0.28 or more, or 0.2827 or more, or 0.285 or more, and 0.33 or less, or 0.325 or less, or 0.3234 or less, or 0.3 or less.

The f1, f2 and f3 each refer to a crystal ratio in the polymer according to comonomer distribution, and the polyethylene can exhibit excellent dart drop impact strength property by satisfying the requirements of the peak area ratio according to the melting temperature as described above.

Further, when the polyethylene is subjected to SSA analysis, it can further satisfy the following requirements of (c4) to (c6):

(c4) f2/f1: 0.7 to 0.9, more specifically, 0.7 or more, or 0.75 or more, or 0.76 or more, or 0.79 or more, and 0.9 or less, or 0.88 or less, or 0.85 or less;

(c5) f3/f1: 0.6 or more, more specifically, 0.6 or more, or 0.65 or more, or 0.7 or more, and 1 or less, or 0.9 or less, or 0.88 or less, or 0.8 or less; and

(c6) f3/f2: 0.8 or more, more specifically, 0.8 or more, or 0.85 or more, or 0.9 or more, and 1.5 or less, or 1.2 or less, or 1.05 or less, or 1 or less.

The f2/f1 refers to a ratio of the medium-crystalline region to the low-crystalline region, the f3/f1 refers to a ratio of the high-crystalline region to the low-crystalline region, and the f3/f2 refers to a ratio of the high-crystalline region to the medium-crystalline region. As these ratios satisfy the above optimal range of requirements, more excellent dart drop impact strength property can be exhibited.

As described above, polyethylene is a semi-crystalline polymer, and includes crystalline and amorphous regions. In the crystalline region, the polymer chain including an ethylene repeating unit or an alpha olefin repeating unit is folded to form a bundle, thereby forming a crystalline block (or a segment) in the form of a lamella. At this time, the ethylene repeating unit forming the lamellar crystals is an ethylene sequence.

Successive self-nucleation and annealing (SSA) is a method of lowering the temperature by stages using a differential scanning calorimeter (DSC) and cooling at the end of each stage to preserve crystals crystallized at the corresponding temperature at each stage.

In other words, polyethylene is completely melted by heating, and then cooled to a specific temperature (T), and when slowly annealed, the lamellas that are not stable at the corresponding temperature (T) are still melted and only the stable lamellas crystallize. At this time, the stability at the corresponding temperature (T) depends on the thickness of the lamellae, and the thickness of the lamellae depends on the chain structure. Accordingly, when such a heat treatment is performed by stages, the lamella thickness and its distribution according to the polymer chain structure can be quantitatively measured, and accordingly, the distribution of each melting peak area can be measured.

According to the present invention, the SSA can be performed by heating the polyethylene to a first heating temperature of 140°C to 142°C using a differential scanning calorimeter, maintaining (annealing) the same for 15 minutes to 30 minutes, and then cooling the same to 28 to 32°C, and repeating heating-annealing-cooling until the final heating temperature reaches 50°C to 54°C while lowering the heating temperature stepwise wherein $n+1^{th}$ heating temperature is set to 3°C to 7°C lower than the $n^{th}$ heating temperature.

More specifically, the SSA can be performed by the following steps of i) to v):

i) heating the polyethylene to 180°C using a differential scanning calorimeter and then maintaining the same for 20 minutes to remove all thermal history before measurement;

ii) cooling from 180°C to 140°C, maintaining for 20 minutes, and then lowering the temperature to 30°C and maintaining for 1 minute;

iii) heating to 135°C, which is 5°C lower than 140°C, and maintaining for 20 minutes, and then lowering the temperature to 30°C and maintaining for 1 minute;

iv) gradually lowering the heating temperature until the heating temperature reaches 50°C, wherein n+1$^{th}$ heating temperature is 5°C lower than n$^{th}$ heating temperature, and the heating rate, holding time, and cooling temperature are the same; and

v) finally, raising the temperature from 0°C to 180°C.

More specifically, the polyethylene is initially heated to 180°C using a differential scanning calorimeter (device name: DSC2500, manufacturer: TA Instruments) and maintained for 20 minutes to remove all thermal history of the sample before measurement. The temperature is lowered from 180°C to 140°C, maintained for 20 minutes, and the temperature is lowered to 30°C, maintained for 1 minute, and then the temperature is raised again.

Next, the polyethylene is heated to a temperature (135°C) which is 5°C lower than the initial heating temperature of 140°C and maintained for 20 minutes, then the temperature is lowered to 30°C and maintained for 1 minute, then the temperature is raised again. In this manner, the n+1$^{th}$ heating temperature is 5°C lower than the n$^{th}$ heating temperature, the holding time and cooling temperature are the same, and the heating temperature is gradually lowered until it reaches 50°C. At this time, the temperature rise and drop rates are controlled to 20°C/min, respectively. Finally, in order to quantitatively analyze a distribution of crystals formed by repeating heating-annealing-cooling, the temperature is raised from 0°C to 180°C at a rate of 10°C/min, and a change in heat quantity is observed to measure a thermogram.

As described above, when the polyethylene of the present invention is heated after repeating the heating-annealing-cooling using the SSA method, peaks according to temperatures appear, and accordingly, ethylene sequences of different thicknesses are obtained, and therefrom, a weighted average ($L_w$) and an arithmetic mean ($L_n$) of the ethylene sequence can be obtained using Equations 4 and 5 below:

[Equation 4]

$$L_n = \frac{S_1L_1 + S_2L_2 + S_3L_3 + \cdots + S_iL_i}{S_1 + S_2 + S_3 + \cdots + S_i} = \sum f_iL_i$$

[Equation 5]

$$L_w = \frac{S_1L_1^2 + S_2L_2^2 + S_3L_3^2 + \cdots + S_iL_i^2}{S_1L_1 + S_2L_2 + S_3L_3 + \cdots + S_iL_i} = \frac{\sum f_iL_i^2}{\sum f_iL_i}$$

in Equations 4 and 5,

$S_i$ represents an area of each melting peak measured in the SSA thermogram, and

$L_i$ represents an average ethylene sequence length (ASL) corresponding to each melting peak in the SSA thermogram.

Further, the ASL can be calculated from the measured SSA thermogram with reference to Journal of Polymer Science Part B: Polymer Physics. 2002, vol. 40, 813-821, and Journal of the Korean Chemical Society 2011, Vol. 55, No. 4.

A ratio of $L_w$ and $L_n$ ($L_w/L_n$) calculated in the same manner as above is inhomogeneity (I) of the ethylene sequence. The larger I value means that the lamellae are the more unevenly distributed in the polymer chain, and SCBs are included in a high content.

Specifically, when the polyethylene according to the present invention is subjected to SSA analysis, the inhomogeneity (I) of the ethylene sequence calculated according to Equation 6 below is 1.4 to 1.5, more specifically, 1.4 or more, or 1.43 or more, or 1.45 or more, and 1.5 or less, or 1.49 or less.

[Equation 6]

$$\text{Inhomogeneity (I)} = Lw / Ln$$

in Equation 6,

Lw represents a weighted average (unit: nm) of the ethylene sequence length (ESL), and Ln represents an arithmetic mean (unit: nm) of ESL, which can be calculated by the method described above.

Specifically, the Lw can be 15 nm to 30 nm, and the Ln can be 12 nm to 20 nm. More specifically, the Lw is 15 nm or more, or 20 nm or more, or 21 nm or more, or 21.13 nm or more, and 30 nm or less, or 25 nm or less, or 22 nm or less, or 21.95 nm or less. Further, the Ln is 12 nm or more, or 14 nm or more, or 14.3 nm or more, or 14.32 nm or more, and 20 nm or less, or 16 nm or less, or 15.5 nm or less, or 15.2 nm or less, or 15.18 nm or less.

As the polyethylene according to the present invention has an inhomogeneity in the above range, it can exhibit improved transparency and dart drop impact strength due to a higher content of SCBs, as compared to existing polyethylene with the same density.

Further, the polyethylene according to the present invention has an ER (polydispersity at the High MW) of 0.7 or more, which is determined according to Equation 7 below:

[Equation 7]

$$ER = C_1 G' \big|_{\text{at } G''_{ref}}$$

in Equation 7,

$C_1$ represents a constant $1.781 \times 10^{-3}$,
G' represents a storage modulus ($dyne/cm^2$) of the polyethylene, and
G"ref represents a loss modulus, 5000 $dyne/cm^2$ of the polyethylene.

ER (Polydispersity at the High MW) is also called rheological polydispersity, and derived through measuring the rheological characteristics (or rheological properties) of a polymer melt. The rheological properties of the polymer melt greatly depend on the basic molecular structure, specifically, molecular weight, molecular weight distribution, and long chain branch (LCB). ER does not depend on the molecular weight and molecular weight distribution in polyethylene and quantifies polydispersity at high Mw.

A larger ER value means the higher polydispersity at high Mw and the presence of molecules with a long relaxation time. On the contrary, a smaller ER value means no polydispersity at high Mw and the presence of molecules with a short relaxation time. The polyethylene according to the present invention can exhibit excellent transparency and processing characteristics as it satisfies the ER requirement in the above range. More specifically, ER is 0.7 or more, or 0.75 or more, or 0.76 or more, and 0.9 or less, or 0.86 or less.

ER can be calculated by a method disclosed in "New measures of polydispersity from rheological data on polymer melts", Journal of Applied Polymer Science, vol. 57, 1605~1626(1995).

The ER measurement method and conditions in the present invention are as described in Experimental Example below.

Further, the polyethylene according to the present invention has a PDR (overall polydispersity) of 5.0 or more, which is determined according to Equation 8 below:

[Equation 8]

$$PDR = \frac{\eta_1^*}{\eta_3^*} \cdot \frac{(\eta_1^* \cdot \eta_3^*)^{1/2}}{\eta_2^*}$$

in Equation 8, $\eta^*_1$, $\eta^*_2$, and $\eta^*_3$ each represent a complex viscosity at reference complex moduli, $G^*_{ref1}$, $G^*_{ref2}$, and $G^*_{ref3}$. In the present invention, $\eta^*_1$, $\eta^*_2$, and $\eta^*_3$ were obtained, based on $G^*_{ref1}=1.95 \times 10^4$ $dyn/cm^2$, $G^*_{ref2} = (G^*_{ref1} G^*_{ref3})^{1/2}$, and $\log10(G^*_{ref3}/G^*_{ref1})=2$ for a linear polymer.

ER does not reflect contributions at low Mw. Accordingly, when interested in the overall polydispersity, that is, when interested in both high and low MW contributions, PDR is used, which is a complex modulus (G*) function.

PDR represents the overall polydispersity of the polyethylene, and in Equation 8, $\frac{\eta_1^*}{\eta_3^*}$ represents shear sensitivity and $\frac{(\eta_1^* \cdot \eta_3^*)^{1/2}}{\eta_2^*}$ represents curvature of a viscosity curve. A higher PDR means higher shear sensitivity, higher polydispersity, and as a result, superior processability. On the contrary, a lower PDR means lower shear sensitivity, lower polydispersity, and as a result, poorer processability.

As the polyethylene according to the present invention exhibits PDR in the above range, it can exhibit excellent processability. More specifically, PDR is 5.0 or more, or 5.5 or more, or 5.7 or more, or 6.0 or more, and 7 or less, or 6.9 or less, or 6.5 or less.

The PDR measurement method and conditions in the present invention are as described in Experimental Example below.

Further, the polyethylene according to the present invention has a head pressure of 210 bar to 260 bar, more specifically, 210 bar or more, or 220 bar or more, or 222 bar or more, and 260 bar or less, or 255 bar or less, or 251 bar or less.

Further, the polyethylene has an output index of 1.60 g/(min·bar) or more, calculated according to Equation 9 below. More specifically, the output index is 1.60 g/(min·bar) or more, or 1.62 g/(min·bar) or more, or 1.64 g/(min·bar) or more, and 2 g/(min·bar) or less, or 1.9 g/(min·bar) or less, or 1.85 g/(min·bar) or less.

Output Index = Output (g/min) discharged from blown extruder for 1 minute/Head pressure (bar) [Equation 9]

The measurement methods and conditions of head pressure and output in the present invention are as described in Experimental Example below.

Further, the polyethylene according to the present invention has a density of 0.916 g/cm$^3$ to 0.920 g/cm$^3$, as measured according to the ASTM D1505 standard.

When the density of the polyethylene is less than 0.916 g/cm$^3$, it is difficult to ensure stability in the slurry polymerization process. Further, density and dart drop impact strength have a trade-off relationship, and when the polyethylene has the high density of more than 0.920 g/cm$^3$, down-gauging is difficult during film production due to the decrease in dart drop impact strength. More specifically, the polyethylene according to the present invention has a density of 0.916 g/cm$^3$ or more, or 0.918 g/cm$^3$ or more, and 0.920 g/cm$^3$ or less, or 0.919 g/cm$^3$ or less.

Further, the polyethylene has a melt index ($MI_{2.16}$) of 0.5 g/10min to 1.5 g/10min, more specifically, 0.5 g/10min or more, or 0.8 g/10min or more, and 1.2 g/10min or less, or 1.0 g/10min or less, as measured at a temperature of 190°C under a load of 2.16 kg according to the ASTM D1238 standard.

As the polyethylene satisfies the low density and the optimal range of the melt index along with the above-mentioned physical properties, it can exhibit excellent processability as well as high dart drop impact strength.

The polyethylene according to the present invention can be an ethylene homopolymer consisting only of an ethylene repeating unit derived from an ethylene monomer; or an ethylene/alpha-olefin copolymer including an alpha olefin repeating unit derived from an alpha olefin monomer together with the ethylene repeating unit.

Specific examples of the alpha-olefin monomer can include propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicocene, etc., and two or more thereof can be used.

More specifically, the polyethylene according to the present invention can be an ethylene/1-hexene copolymer.

Meanwhile, the polyethylene having the above-described physical properties can be prepared by a preparation method including the step of subjecting ethylene and olefin monomers to slurry polymerization while introducing 5 ppm to 30 ppm of hydrogen, based on the total weight of the monomers including the ethylene and olefin monomers, in the presence of a hybrid supported catalyst including a first transition metal compound represented by the following Formula 1 and a second transition metal compound represented by the following Formula 2.

[Formula 1]

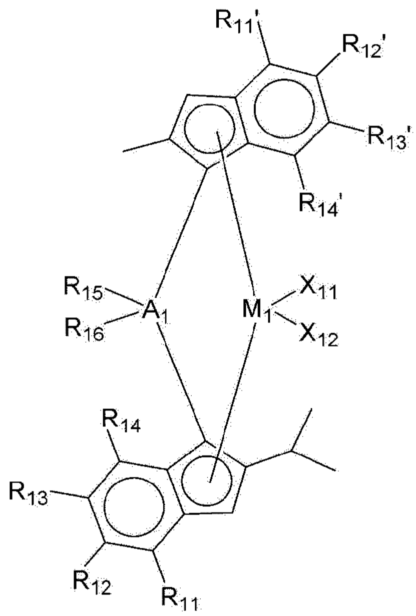

in Formula 1,

$M_1$ is a Group 4 transition metal,
$A_1$ is C, Si, or Ge,
$R_{11}$ and $R_{11}$' are each independently $C_{6-20}$ aryl, $C_{7-20}$ alkylaryl, $C_{7-20}$ arylalkyl, or $C_{7-20}$ alkoxyaryl,
$R_{12}$, $R_{13}$, $R_{14}$, $R_{12}$', $R_{13}$', and $R_{14}$' are each independently hydrogen, halogen, $C_{1-20}$ alkyl, $C_{1-20}$ alkenyl, $C_{1-20}$ alkoxy, $C_{6-20}$ aryl, $C_{7-20}$ alkylaryl, or $C_{7-20}$ arylalkyl,
one of $R_{15}$ and $R_{16}$ is $C_{2-20}$ alkoxyalkyl, and the other is $C_{1-20}$ alkyl, and
$X_{11}$ and $X_{12}$ are each independently halogen or $C_{1-20}$ alkyl,

[Formula 2]

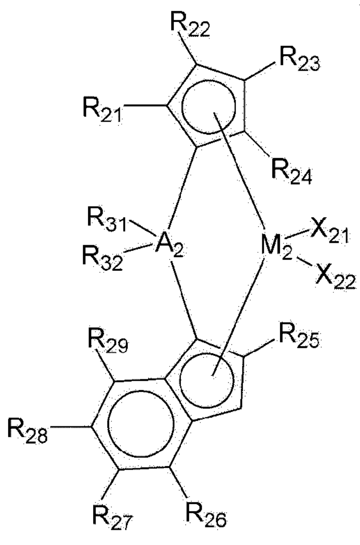

in Formula 2,
$M_2$ is a Group 4 transition metal,
$A_2$ is C, Si, or Ge,
$R_{21}$ to $R_{24}$ are each independently $C_{1-20}$ alkyl,
$R_{25}$ is $C_{1-20}$ alkyl,

$R_{26}$ is $C_{6-20}$ aryl substituted or unsubstituted with $C_{1-20}$ alkyl,
$R_{27}$ to $R_{29}$ are each independently any one of hydrogen, $C_{1-20}$ alkyl, $C_{2-20}$ alkenyl, $C_{6-20}$ aryl, $C_{7-20}$ alkylaryl, and $C_{7-20}$ arylalkyl, or two adjacent groups of $R_{27}$ to $R_{29}$ are connected with each other to form a $C_{4-8}$ aliphatic ring,
$R_{31}$ and $R_{32}$ are each independently $C_{1-20}$ alkyl, and
$X_{21}$ and $X_{22}$ are each independently halogen or $C_{1-20}$ alkyl.

**In** the present invention, the substituents of Formulae will be described in more detail below.

The halogen can be fluorine (F), chlorine (Cl), bromine (Br) or iodine (I).

The $C_{1-20}$ alkyl can be linear, branched, or cyclic alkyl. Specifically, the $C_{1-20}$ alkyl can be $C_{1-20}$ linear alkyl; $C_{1-10}$ linear alkyl; $C_{1-5}$ linear alkyl; $C_{3-20}$ branched or cyclic alkyl; $C_{3-15}$ branched or cyclic alkyl; or $C_{3-10}$ branched or cyclic alkyl. More specifically, the $C_{1-20}$ alkyl can include a methyl group, an ethyl group, an n-propyl group, an iso-propyl group, an n-butyl group, an iso-butyl group, a tert-butyl group, an n-pentyl group, an iso-pentyl group, or a cyclohexyl group, or the like.

The $C_{2-20}$ alkenyl can be linear, branched, or cyclic alkenyl. Specifically, the $C_{2-20}$ alkenyl can be $C_{2-20}$ linear alkenyl, $C_{2-10}$ linear alkenyl, $C_{2-5}$ linear alkenyl, $C_{3-20}$ branched alkenyl, $C_{3-15}$ branched alkenyl, $C_{3-10}$ branched alkenyl, $C_{5-20}$ cyclic alkenyl, or $C_{5-10}$ cyclic alkenyl. More specifically, the $C_{2-20}$ alkenyl can be ethenyl, propenyl, butenyl, pentenyl, or cyclohexenyl, or the like.

The $C_{1-20}$ alkoxy can be a linear, branched, or cyclic alkoxy group. Specifically, the $C_{1-20}$ alkoxy can be $C_{1-20}$ linear alkoxy; $C_{1-10}$ linear alkoxy; $C_{1-5}$ linear alkoxy; $C_{3-20}$ branched or cyclic alkoxy; $C_{3-15}$ branched or cyclic alkoxy; or $C_{3-10}$ branched or cyclic alkoxy. More specifically, the $C_{1-20}$ alkoxy can be methoxy, ethoxy, n-propoxy, iso-propoxy, n-butoxy, iso-butoxy, tert-butoxy, n-pentoxy, iso-pentoxy, neo-pentoxy, or cyclohetoxy, etc.

The $C_{2-20}$ alkoxyalkyl includes a structure of $-R_y-O-R_z$, and can be a substituent in which one or more hydrogens of alkyl($-R_y$) are substituted with alkoxy($-O-R_z$). Specifically, the $C_{2-20}$ alkoxyalkyl can be a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group or the like.

The $C_{6-20}$ aryl can refer to monocyclic, bicyclic or tricyclic aromatic hydrocarbon. Specifically, the $C_{6-20}$ aryl can be a phenyl group, a naphthyl group, an anthracenyl group or the like.

The $C_{7-20}$ alkylaryl can refer to a substituent in which one or more hydrogens of aryl are substituted with alkyl. Specifically, the $C_{7-20}$ alkylaryl can be methylphenyl, ethylphenyl, n-propylphenyl, iso-propylphenyl, n-butylphenyl, iso-butylphenyl, tert-butylphenyl, cyclohexylphenyl or the like.

The $C_{7-20}$ arylalkyl can refer to a substituent in which one or more hydrogens of alkyl are substituted with aryl. Specifically, the $C_{7-20}$ arylalkyl can be benzyl, phenylpropyl, phenylhexyl or the like.

Further, the Groups 4 transition metal can be titanium, zirconium, hafnium or the like.

The hybrid metallocene catalyst according to the present invention can be a hybrid catalyst including a high-molecular-weight, highly copolymerizable first transition metal compound and a low-molecular-weight, low copolymerizable second transition metal compound at the same time.

Specifically, the first transition metal compound represented by Formula 1 contributes to preparation of a high-molecular-weight copolymer having a high SCB content, and the second transition metal compound represented by Formula 2 contributes to preparation of a low-molecular-weight copolymer having a low SCB (short chain branch) content.

Accordingly, the hybrid metallocene catalyst of the present invention can exhibit high copolymerizability for a polyethylene in the high molecular weight region due to the first transition metal compound while exhibiting low copolymerizability for a polyethylene in the low molecular weight region due to the action of the second transition metal compound. As a result, the polyethylene prepared using the hybrid metallocene catalyst according to the present invention has an appropriate level of crystallinity and a uniform lamellar structure. Further, since the lamellar structure has a structure connected by a tie chain, it can exhibit high dart drop impact strength. **In** other words, in order to increase the dart drop impact strength, it is necessary to have sufficiently low crystallinity such that high-molecular-weight chains, which can become ties, can diverge into the amorphous region.

The first transition metal compound contributes to preparation of a high-molecular-weight copolymer and exhibits a relatively high comonomer incorporation rate, as compared to the second transition metal compound.

In particular, since the first transition metal compound asymmetrically includes two indenyl derivatives which are different from each other in their structures and these two indenyl derivatives are connected by a bridge group, it can have high structural stability and can exhibit a high polymerization activity even when supported on a support.

In addition, since the carbon at position 4 of each indenyl derivative is substituted with a bulky group such as $C_{6-20}$ aryl substituted with $C_{1-20}$ alkyl, high activity can be maintained by creating an appropriate electronic environment.

Further, methyl and isopropyl substituents are introduced into the carbon at position 2 of each indenyl derivative, and OtBu capable of coordinating with MAO is located in the bridge group that connects the two indenyl ligands, thereby securing a stable activity through a higher loading rate. Accordingly, it is possible to prepare a polyethylene that has excellent processability and mechanical properties while exhibiting high activity and excellent morphology during olefin polymerization.

Specifically, in Formula 1, the central metal ($M_1$) can be specifically a Group 4 transition metal of Ti, Zr, or Hf, and more specifically, Zr.

Further, in Formula 1, $A_1$ can be specifically Si.

Further, $R_{11}$ and $R_{11}$' can be each independently $C_{6-12}$ aryl, $C_{7-18}$ alkylaryl, or $C_{7-18}$ alkoxyaryl, and more specifically, phenyl, naphthyl, t-butylphenyl, 3,5-di-t-butylphenyl, 2,5-dimethylphenyl, or methoxyphenyl.

Further, $R_{12}$, $R_{13}$, $R_{14}$, $R_{12}$', $R_{13}$', and $R_{14}$' can be each hydrogen.

Further, one of $R_{15}$ and $R_{16}$ can be $C_{2-12}$ alkoxyalkyl, and the other can be $C_{1-8}$ alkyl, and more specifically, one of $R_{15}$ and $R_{16}$ can be t-butoxyhexyl, and the other can be methyl.

Further, $X_{11}$ and $X_{12}$ can be each independently chloro or methyl, and more specifically, $X_{11}$ and $X_{12}$ can be each chloro.

Accordingly, the first transition metal compound can be specifically a compound, in which, in Formula 1, $M_1$ is Ti, Zr, or Hf, $A_1$ is Si, $R_{11}$ and $R_{11}$' are each independently $C_{6-12}$ aryl, $C_{7-18}$ alkylaryl, or $C_{7-18}$ alkoxyaryl, $R_{12}$, $R_{13}$, $R_{14}$, $R_{12}$', $R_{13}$', and $R_{14}$' are each hydrogen, one of $R_{15}$ and $R_{16}$ is $C_{2-12}$ alkoxyalkyl, and the other is $C_{1-8}$ alkyl, and $X_{11}$ and $X_{12}$ can be each independently chloro or methyl.

More specifically, the first transition metal compound can be a compound, in which, in Formula 1, $M_1$ is Zr, $A_1$ is Si, $R_{11}$ and $R_{11}$' are each independently phenyl, naphthyl, t-butylphenyl, 3,5-di-t-butylphenyl, 2,5-dimethylphenyl, or methoxyphenyl, $R_{12}$, $R_{13}$, $R_{14}$, $R_{12}$', $R_{13}$', and $R_{14}$' are each independently hydrogen, one of $R_{15}$ and $R_{16}$ is t-butoxyhexyl, and the other is methyl, and $X_{11}$ and $X_{12}$ are each independently chloro.

Much more specifically, the first transition metal compound can be any one selected from the group consisting of the following compounds:

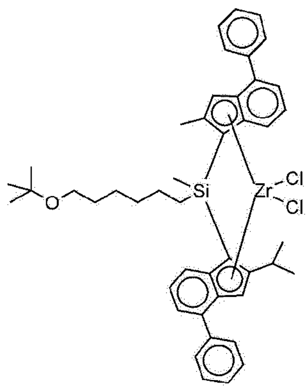
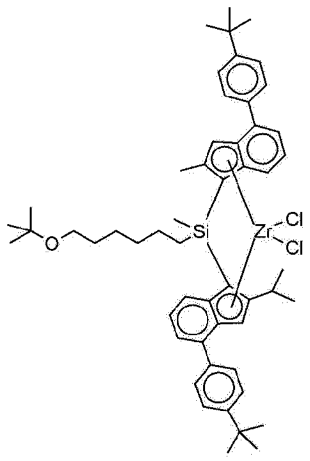
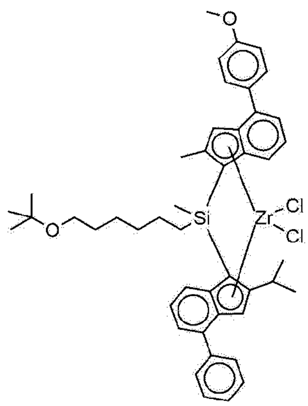

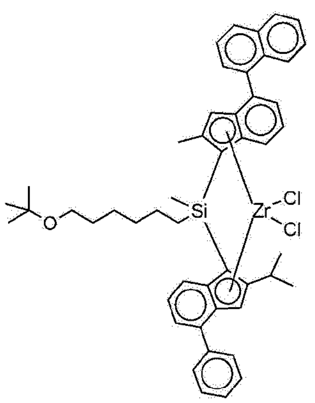
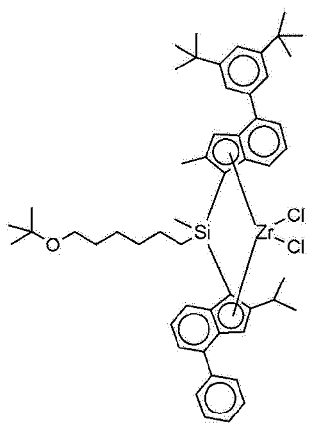
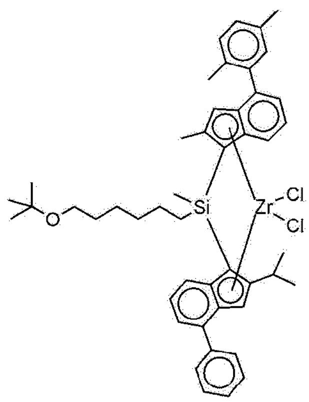

The first transition metal compound represented by Formula 1 can be synthesized by applying known reactions, and for more detailed synthesis methods, Synthesis Examples can be served as a reference.

Meanwhile, the second transition metal compound represented by Formula 2 contributes to preparation of a low-molecular-weight copolymer and exhibits a relatively low comonomer incorporation rate, as compared to the first transition metal compound.

Specifically, in Formula 2, $M_2$ can be Ti, Zr, or Hf, and more specifically, Zr or Hf.

Further, $A_2$ can be specifically Si.

Further, $R_{21}$ to $R_{24}$ can be each independently $C_{1-8}$ alkyl, and more specifically, $R_{21}$ to $R_{24}$ can be each methyl.

Further, $R_{25}$ can be $C_{1-8}$ alkyl, and more specifically, $R_{25}$ can be methyl.

Further, $R_{26}$ can be $C_{6-18}$ aryl substituted or unsubstituted with $C_{1-8}$ alkyl, and more specifically, $R_{26}$ can be phenyl, t-butylphenyl, naphthyl, or 2,5-dimethylphenyl.

Further, $R_{27}$ to $R_{29}$ are each independently hydrogen, or two adjacent groups of $R_{27}$ to $R_{29}$ are linked to each other to form a $C_{4-8}$ aliphatic ring, and more specifically, $R_{27}$ to $R_{29}$ are each independently hydrogen, or two adjacent groups of $R_{27}$ to $R_{29}$ are linked to each other to form a cyclopentyl or cyclohexyl ring.

Further, $R_{31}$ and $R_{32}$ can be each independently $C_{1-8}$ alkyl, and more specifically, $R_{31}$ and $R_{32}$ can be each methyl.

Further, $X_{31}$ and $X_{32}$ can be each independently chloro or methyl, and more specifically, chloro.

Accordingly, the second transition metal compound can be a compound, in which, in Formula 2, $M_2$ is Ti, Zr, or Hf, $A_2$ is Si, $R_{21}$ to $R_{24}$ are each independently $C_{1-8}$ alkyl, $R_{25}$ is $C_{1-8}$ alkyl, $R_{26}$ is $C_{6-18}$ aryl substituted or unsubstituted with $C_{1-8}$ alkyl, $R_{27}$ to $R_{29}$ are each independently hydrogen, or two adjacent groups of $R_{27}$ to $R_{29}$ are linked to each other to form a $C_{4-8}$ aliphatic ring, $R_{31}$ and $R_{32}$ are each independently $C_{1-8}$ alkyl, and $X_{31}$ and $X_{32}$ are each independently chloro or methyl.

More specifically, the second transition metal compound can be a compound, in which, in Formula 2, $M_2$ is Zr or Hf, $A_2$ is Si, $R_{21}$ to $R_{24}$ are each independently methyl, $R_{25}$ is methyl, $R_{26}$ is phenyl, t-butylphenyl, naphthyl, or 2,5-dimethylphenyl, $R_{27}$ to $R_{29}$ are each independently hydrogen, or two adjacent groups of $R_{27}$ to $R_{29}$ are linked to each other to form a cyclopentyl or cyclohexyl ring, $R_{31}$ and $R_{32}$ are each independently methyl, and $X_{31}$ and $X_{32}$ are each independently chloro.

Much more specifically, the second transition metal compound represented by Formula 2 can be any one selected from the group consisting of the following compounds:

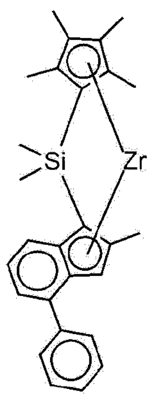
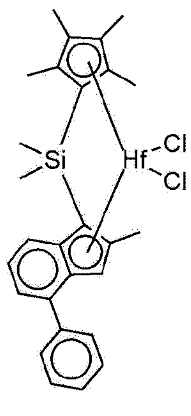
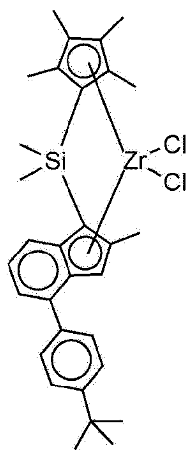
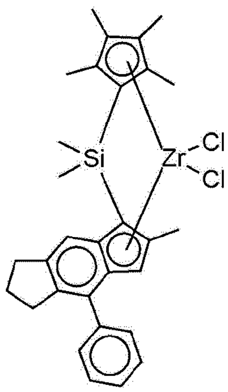
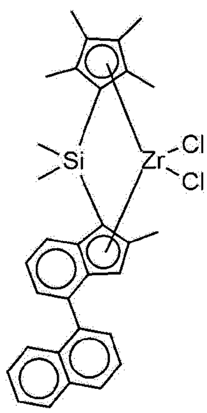
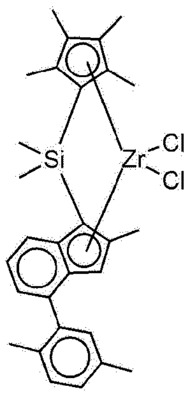

The second transition metal compound represented by Formula 2 can be synthesized by applying known reactions, and for more detailed synthesis methods, Synthesis Examples can be served as a reference.

With regard to the hybrid metallocene catalyst, the first transition metal has only a racemic isomer. In contrast, the second transition metal compound has no meso isomer and no racemic isomer.

As used herein, the term "racemic form" or "racemate" or "racemic isomer" means a form in which the same substituents on two ligands are on the opposite side to the plane containing the Group 4 transition metal represented by $M_1$ in Formula 1, for example, a transition metal such as zirconium (Zr) or hafnium (Hf), etc., and the center of the ligand moiety.
Further, as used herein, the term "meso form" or "meso isomer" is a stereoisomer of the above-mentioned racemic isomer, and means a form in which the same substituents on two ligands are on the same side to the plane containing the Group 4 transition metal represented by $M_1$ in Formula 1 and the center of the ligand moiety.
Further, the hybrid metallocene catalyst according to the present invention can increase catalytic activity and can further improve physical properties of the prepared polymer by controlling a molar ratio of the first and second transition metal compounds.
For example, the hybrid metallocene catalyst can include the first and second transition metal compounds at a molar ratio of 1:6 to 6:1. When the above mixing ratio requirement is satisfied, excellent catalytic activity is maintained, the crystal structure of polyethylene prepared from the hybrid supported catalyst is further optimized, and the distribution of the lamellar structure becomes more uniform, thereby further improving dart drop impact strength and processability. More specifically, the molar ratio of the first and second transition metal compound can be 2:1 to 4:1, or 2:1 to 3:1.
Further, the hybrid metallocene catalyst according to the present invention can further include one or more of a support and a cocatalyst.
When the hybrid metallocene catalyst includes a support, the first and second transition metal compounds are used in the form of a supported catalyst of being supported on the support.
As the support, a support having highly reactive hydroxyl, silanol, or siloxane groups on the surface can be used. To this end, those which are surface-modified by calcination or dried to remove water on the surface can be used.
For example, silica prepared by calcination of silica gel, silica, silica-alumina, silica-magnesia, etc., such as silica dried at a high temperature, can be used. These supports can usually include oxide, carbonate, sulfate, and nitrate components such as $Na_2O$, $K_2CO_3$, $BaSO_4$, and $Mg(NO_3)_2$, etc.
When used as the supported catalyst, the prepared polymer has excellent particle shape and bulk density, and the catalyst can be suitably used in traditional slurry polymerization, bulk polymerization, and gas phase polymerization processes. In addition, among various supports, silica supports support the transition metal compound by chemical binding of functional groups thereof, and therefore, there is little catalyst released from the surface of the support during the ethylene polymerization process, and as a result, when the polyethylene is prepared by slurry polymerization or gas phase polymerization, a fouling phenomenon, sticking to the wall surface of the reactor or with itself, can be minimized.
The support can have an average particle diameter (D50) of 20 $\mu$m to 40 $\mu$m. When the support has the above particle size, it can support the transition metal compound with greater efficiency, and as a result, catalytic activity can be increased. More specifically, the average particle diameter can be 20 $\mu$m or more, or 25 $\mu$m or more, and 40 $\mu$m or less, or 30 $\mu$m or less.
Meanwhile, in the present invention, the average particle diameter (D50) of the support means a particle diameter at the 50% point in cumulative particle number distribution according to particle size (particle diameter). The D50 can be measured using a laser diffraction method. Specifically, a support which is a measurement target is dispersed in a dispersion medium such as deionized water, etc., and then introduced into a commercially available laser diffraction particle size measurement instrument (e.g., Microtrac S3500), and when particles pass through a laser beam, differences in diffraction pattern with respect to the particle size are measured to calculate the particle size distribution. The average particle size can be determined by calculating the particle size at the 50% point in the cumulative particle number distribution according to particle size in the measurement instrument.
Further, when supported on the support, the first and second transition metal compounds can be supported, for example, in the content range of 1 mmol or more, or 10 mmol or more, or 15 mmol or more, or 17.5 mmol or more, and 100 mmol or less, or 80 mmol or less, or 60 mmol or less, or 52.5 mmol or less, based on 1,000 g of the silica support, respectively. When supported in the above content range, the supported catalyst exhibits appropriate activity, which can be advantageous in terms of maintaining catalytic activity and economic efficiency.
Further, the hybrid metallocene catalyst can further includes a cocatalyst in terms of improving high activity and process stability.
Specifically, the cocatalyst can include one or more of compounds represented by the following Formula 3.

[Formula 3] $-[Al(R_{41})-O]a-$

in Formula 3,

$R_{41}$ is halogen; or $C_{1-20}$ hydrocarbyl substituted or unsubstituted with halogen; and
a is an integer of 2 or more.

Meanwhile, in the present specification, the hydrocarbyl group is a monovalent functional group formed by

removing a hydrogen atom from hydrocarbon, and can include alkyl, alkenyl, alkynyl, aryl, aralkyl, aralkenyl, aralkynyl, alkylaryl, alkenylaryl, alkynylaryl groups, etc. Further, a hydrocarbyl group having 1 to 20 carbon atoms can be a hydrocarbyl group having 1 to 15 carbon atoms or 1 to 10 carbon atoms. Specifically, the hydrocarbyl group having 1 to 20 carbon atoms can be a linear, branched, or cyclic alkyl group, such as a methyl group, an ethyl group, an n-propyl group, an iso-propyl group, an n-butyl group, an iso-butyl group, a tert-butyl group, an n-pentyl group, an n-hexyl group, an n-heptyl group, a cyclohexyl group, etc.; an aryl group, such as a phenyl group, a naphthyl group, an anthracenyl group, etc.

Examples of the compound represented by Formula 3 can include alkyl aluminoxane-based compounds such as methyl aluminoxane, ethyl aluminoxane, isobutyl aluminoxane, or butyl aluminoxane, etc., and any one thereof or a mixture of two or more thereof can be used.

Among the above compounds, the cocatalyst can be more specifically an alkyl aluminoxane-based cocatalyst such as methyl aluminoxane.

The alkyl aluminoxane-based cocatalyst stabilizes the first and second transition metal compounds and acts as a Lewis acid, thereby further improving the catalytic activity by including a metal element capable of forming a bond through a Lewis acid-base interaction with the functional group which is introduced into the bridge groups of the first and second transition metal compounds.

In addition, the amount of the cocatalyst to be used can be appropriately adjusted depending on the desired physical properties or effects of the catalyst and polyethylene. For example, when silica is used as the support, the cocatalyst can be supported in an amount of 100 g or more, or 1000 g or more, or 2000 g or more, and 6000 g or less, or 5500 g or less, or 5400 g or less, based on the weight of the support, e.g., 1,000 g of silica.

The hybrid metallocene catalyst according to the present invention having the above-described structure can be prepared by a preparation method including the step of supporting the cocatalyst compound on the support, and the step of supporting the first and second transition metal compounds on the support, wherein the supporting order of the cocatalyst and the first and second transition metal compounds can vary as needed, and the supporting order of the first and second transition metal compounds can also vary as needed. The first and second transition metal compounds can be supported at the same time. Considering the effect of the supported catalyst with the structure which is determined according to the supporting order, sequentially supporting the first and second transition metal compounds after supporting the cocatalyst on the support ensures that the prepared supported catalyst has high catalytic activity and superior process stability in the preparation process of polyethylene.

As described above, the hybrid metallocene catalyst according to the present invention can exhibit excellent catalytic activity by including the first and second transition metal compounds with specific structures. Accordingly, the hybrid metallocene catalyst can be suitably used in the polymerization of olefinic monomers.

Meanwhile, the olefinic monomer can be ethylene, alpha-olefin, cyclic olefin, diene olefin or triene olefin having two or more double bonds.

Specific examples of the olefinic monomer can include ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, alpha-methylstyrene, divinylbenzene, 3-chloromethylstyrene, etc., and two or more of these monomers can be also mixed and copolymerized. More specifically, the olefinic monomer can be 1-hexene.

The amount of the olefinic monomer to be added can be determined depending on the physical properties of the polyethylene to be prepared. For example, considering the physical properties of the polyethylene to be achieved in the present invention and the effect of improving high dart drop impact strength and processability, the olefinic monomer can be introduced in an amount of 4% by weight to 15% by weight, more specifically, 4% by weight or more, or 5% by weight or more, or 5.5% by weight or more, and 15% by weight or less, or 14.8% by weight or less, or 14.6% by weight or less, based on the total weight of the monomers including the ethylene monomer and the olefin monomer.

The polymerization reaction is performed under a hydrogen input condition.

Specifically, hydrogen can be introduced in an amount of 5 ppm to 30 ppm, based on the total weight of the ethylene monomer, or based on the total weight of the monomers including the ethylene and olefin monomers when the monomer includes the olefin monomer in addition to ethylene. More specifically, hydrogen can be introduced in an amount of 5 ppm or more, or 10 ppm or more, or 15 ppm or more, or 16 ppm or more, and 30 ppm or less, or 28 ppm or less, or 25 ppm or less, or 24 ppm or less, based on the total weight of the monomers.

When introduced in the above range, it is easier to achieve the above-described physical properties of the polyethylene.

The polymerization reaction can be performed by a slurry polymerization reaction.

Accordingly, the polymerization reaction can be performed using a single continuous slurry polymerization reactor or a loop slurry reactor.

In addition, the hybrid supported catalyst can be injected after being dissolved or diluted in an aliphatic

hydrocarbon solvent with 4 to 12 carbon atoms, e.g., isobutane, pentane, hexane, heptane, nonane, decane, and isomers thereof, an aromatic hydrocarbon solvent, such as toluene and benzene, or a hydrocarbon solvent substituted with a chlorine atom, such as dichloromethane or chlorobenzene, etc. The solvent used here is preferably treated with a small amount of alkyl aluminum to remove a small amount of water or air, which acts as a catalyst poison. It is also possible to further use a cocatalyst.

Further, the polymerization reaction can be performed at a temperature of 40°C or higher, or 60°C or higher, or 80°C or higher, and 110°C or lower, 100°C or lower, or 90°C or lower. In addition, when the pressure condition is further controlled during the polymerization reaction, the reaction can be performed under a pressure of 5 bar or more, or 10 bar or more, or 20 bar or more, and 50 bar or less, or 45 bar or less, or 40 bar or less. When the polymerization proceeds under such temperature and pressure, the desired physical properties of polyethylene can be more easily realized.

The polyethylene prepared by the above preparation method has a uniformly distributed lamellar structure together with an appropriate level of crystallinity. Therefore, the polyethylene exhibits excellent dart drop impact strength property and transparency. Accordingly, the polyethylene can be useful in the production of films, specifically, blown films, which require high mechanical properties along with excellent transparency.

Accordingly, the present invention provides a resin composition including the polyethylene, specifically, a composition for producing a film.

Further, the present invention provides a film, specifically, a blown film which is produced by using the polyethylene or the resin composition.

The film according to the present invention can be produced according to a common film production method, except for using the polyethylene. For example, the film can be produced by mixing the polyethylene, and optionally, additives such as antioxidants and processing aids to prepare a composition for producing a film, and extruding the composition into a film using an extruder.

In addition, the film can exhibit excellent transparency and mechanical properties by including the polyethylene.

Specifically, the film has a dart drop impact strength of 1900 gf or more, as measured according to the Method A of ASTM D 1709 under conditions of a Blown-Up Ratio (BUR) of 2.3 to 3, more specifically, BUR of 2.5, and a film thickness of 45 $\mu$m to 55 $\mu$m, more specifically, 50 $\mu$m, and has a haze of 14% or less, or 13.5% or less, as measured according to ISO 13468 standard. As the dart drop impact strength is higher, the film is better, and therefore, the upper limit is not particularly limited. However, the dart drop impact strength can be, for example, 3000 gf or less. Also, as the haze is lower, the film is better, and therefore, the lower limit is not particularly limited. However, the haze can be, for example, 1% or more.

Hereinafter, preferred exemplary embodiments will be provided for better understanding of the present invention. However, the following exemplary embodiments are provided only for understanding the present invention more easily, but the content of the present invention is not limited thereby.

Meanwhile, in the present specification, room temperature means 23±5°C.

**<Preparation of Transition Metal Compound>**

**Synthesis Example 1**

2-Methyl-4-naphthyl-indene (1 equivalent weight) was dissolved in MTBE (0.3 M), and to the resulting solution, n-BuLi (1.05 equivalent weights) was slowly added dropwise at - 25°C, followed by stirring at room temperature for 3 hours. To the resulting product, (t-BuOHex)MeSi$Cl_2$ (1.05 equivalent weight) was introduced at -10°C, and stirred at room temperature overnight to prepare a mono-Si compound-containing solution.

In another stirrer, 2-iso-propyl-4-phenyl-indene (1 equivalent weight) was dissolved in MTBE (0.3 M), and to the resulting solution, n-BuLi (1.05 equivalent weight) was slowly added dropwise at -25°C, followed by stirring at room temperature for 3 hours. To the resulting product, CuCN (2 mol%) was introduced, and stirred for 30 minutes, and the mono-Si compound (a1)-containing solution prepared above was introduced, and then stirred at room temperature overnight, followed by work-up with water and drying. Thus, a ligand (a2) was obtained.

The ligand (a2) was dissolved in toluene/ether (volume ratio of 2/1, 0.53 M), n-BuLi (2.05 equivalent weights) was introduced to the resulting solution at -25°C, and then stirred at room temperature for 5 hours to prepare a lithiated ligand.

A slurry which was prepared by mixing $ZrCl_4$ (1 equivalent weight) with toluene (0.17 M) in a separate flask was introduced to the lithiated ligand, and stirred at room temperature overnight. When the reaction was completed, the solvent was dried under vacuum, DCM was introduced to the dry product, and LiCl was removed by filtration. The filtrate was dried under vacuum and recrystallized at room temperature by adding DCM and hexane. Thereafter, the produced solid was filtered and dried under vacuum to obtain a solid-phase transition metal compound (A-1).

$^1$H NMR (500MHz, $CDCl_3$, 7.26ppm): 0.82 (1.5H, t), 1.01 (3.5H, m), 1.14 (9H, s), 1.40 (9H, s), 1.52 (8H, m), 1.65 (4H, m), 1.77 (2H, m), 2.21 (3H, s), 3.25 (1H, m), 3.33 (2H, t), 6.58 (1H, s), 6.94 (1H, s), 7.15 (1H, t), 7.28 (5H, m), 7.40 (4H, m), 7.44 (3H, m), 7.63 (2.5H, m), 7.82 (2.5H, d)

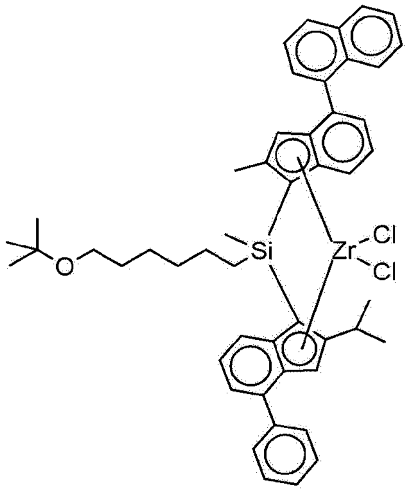

(A-1)

**Synthesis** Example 2

A transition metal compound (A-2) below was prepared in the same manner as in Synthesis Example 1, except that 2-methyl-4-(3,5-di-t-butyl-phenyl)indene was used instead of 2-methyl-4-naphthyl-indene.

$^1$H NMR (500MHz, $CDCl_3$, 7.26ppm): 0.85 (5H, m), 1.15 (9H, s), 1.32 (20H, s,m), 1.42 (8H, m), 1.59 (2H, m), 1.83 (2H, m), 2.22 (3H, s), 3.27 (1H, m), 3.37 (2H, t), 6.75 (1H, s), 6.87 (1H, s), 7.12 (2H, m), 7.30 (1H, m), 7.42 (2H, m), 7.46 (3H, m), 7.56 (1H, m),7.60 (s, 1H), 7.70 (2.5H, m), 7.74 (1.5H, s,d)

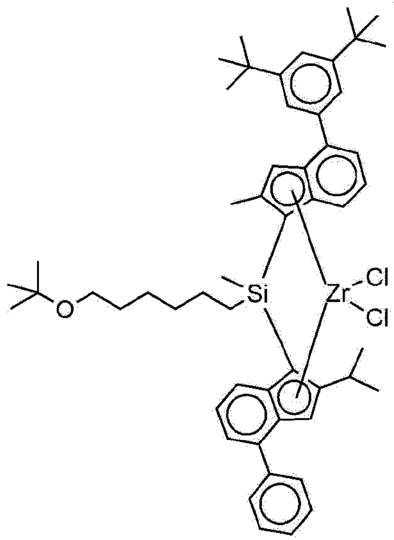

(A-2)

**Synthesis Example 3**

A transition metal compound (A-3) below was prepared in the same manner as in Synthesis Example 1, except that 2-methyl-4-(4-tert-butyl-phenyl)-indene was used instead of 2-methyl-4-naphthyl-indene, and 2-isopropy-4-(4-t-butyl-phenyl)-indene was used instead of 2-isopropyl-4-phenyl-indene.

$^1$H NMR (500MHz, $CDCl_3$, 7.26ppm): 0.89 (3H, t), 1.08 (2H, m), 1.20 (9H, s), 1.35 (24H, s,m), 1.51 (2H, m), 1.61 (2H, m), 1.66 (2H, m), 1.88 (2H, m), 2.25 (3H, s), 3.28 (1H, m), 3.38 (2H, t), 6.98 (1H, s), 7.02 (1H, s), 7.11 (2H, dq), 7.36 (2H, dd), 7.46 (4H, dd), 7.51 (1H, m), 7.60 (4.5H, m), 7.70 (0.5H, d)

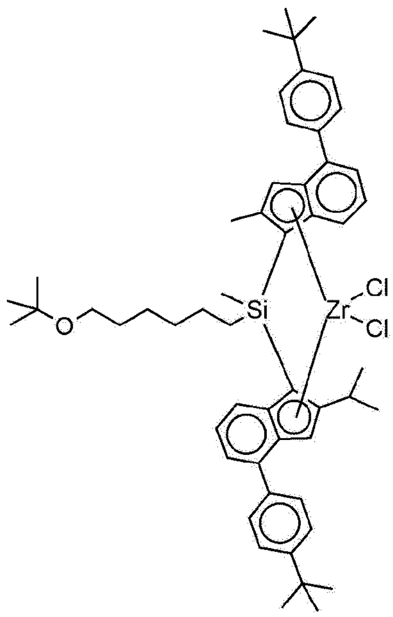

(A-3)

Synthesis Example 4

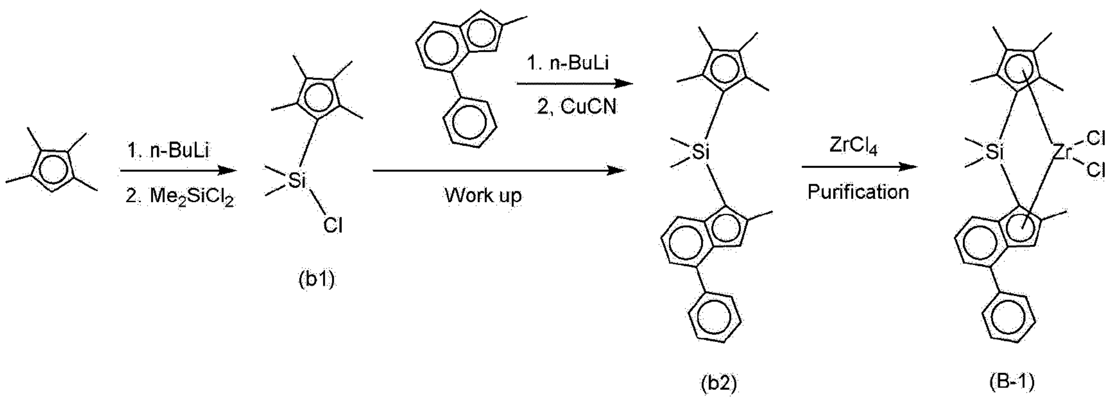


1 Equivalent weight of tetramethylcyclopentadiene (TMCP) was dissolved in THF (0.3 M), and to the prepared solution, n-BuLi (1.05 equivalent weight) was slowly added dropwise at -25°C, followed by stirring at room temperature for 3 hours. To the resulting reaction solution, $Me_2SiCl_2$ (1.05 equivalent weights) was introduced at -10°C, and stirred at room temperature overnight to prepare a mono-Si compound (b 1)-containing solution.

In another reactor, 2-methyl-4-phenyl-indene (1 equivalent weight) was dissolved in MTBE (0.3 M), and to the resulting solution, n-BuLi (1.05 equivalent weight) was slowly added dropwise at -25°C, followed by stirring at room temperature for 3 hours. To the resulting reaction solution, CuCN (2 mol%) was introduced, and stirred for 30 minutes, and the mono-Si compound (b1)-containing solution prepared above was introduced, and then stirred at room temperature overnight, followed by work-up with water and drying. Thus, a ligand (b2) was obtained.

The ligand (b2) was dissolved in toluene/ether (volume ratio of 2/1, 0.53 M), n-BuLi (2.05 equivalent weights) was added to the resulting solution at -25°C, and then stirred at room temperature for 5 hours to prepare a lithiated ligand.

A slurry which was prepared by mixing $ZrCl_4$ (1 equivalent weight) with toluene (0.17 M) in a separate flask was introduced to the lithiated ligand, and stirred at room temperature overnight. When the reaction was completed, the solvent was removed by drying under vacuum, DCM was introduced to the dry product, and LiCl was removed by filtration. The filtrate was dried under vacuum and recrystallized at room temperature by adding DCM and hexane. Thereafter, the produced solid was filtered and dried under vacuum to obtain a solid-phase transition metal compound (B-1).

$^1H$ NMR (500MHz, $CDCl_3$, 7.26ppm): 1.12 (3H, s), 1.23 (3H, s), 1.88 (3H, s), 1.93 (3H, s), 1.99(3H, s), 2.06 (3H, s), 2.28 (3H, s), 7.02 (1H, s), 7.11 (1H, m), 7.29 (1H, d), 7.40 (1H, m), 7.46 (2H, t), 7.60 (1H, d), 7.68 (2H, d)

**Synthesis Example 5**

A transition metal compound (B-2) below was prepared in the same manner as in Synthesis Example 4, except that 2-methyl-4-(4-(t-butyl-phenyl)indene was used instead of 2-methyl-4-phenyl-indene.

$^1H$ NMR (500MHz, $CDCl_3$, 7.26ppm): 1.11 (9H, s), 1.22 (3H, s), 1.38 (9H, s), 1.88 (6H, d), 1.99(3H, s), 2.02 (3H, m), 2.33 (3H, s), 7.08 (1H, s), 7.12 (2H, m), 7.28 (2H, d), 7.58 (3H, d)

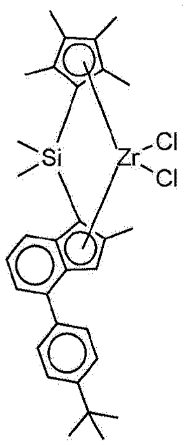

(B-2)

**Synthesis Example 6**

A transition metal compound (B-3) below was prepared in the same manner as in Synthesis Example 4, except that 2-methyl-4-(2,5-dimethyl-phenyl)indene was used instead of 2-methyl-4-phenyl-indene.

$^1H$ NMR (500MHz, $CDCl_3$, 7.26ppm): 0.96 (6H, s), 1.77 (6H, s), 2.18 (6H, m), 1.57 (3H, s), 1.79 (3H, s), 2.22 (3H, s), 6.89 (1H, s), 7.20 (1H, m), 7.36 (2H, m), 7.57(2H, m), 7.70 (1H, s)

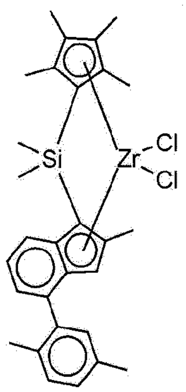

(B-3)

**Synthesis Example 7**

A transition metal compound (C-1) having the following structure was prepared in the same manner as in Comparative Synthesis Example 2 of Korean Patent Publication No. 10-2022-0067494.

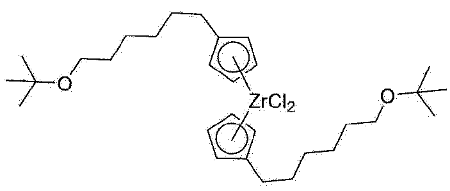

(C-1)

**Synthesis Example 8**

A transition metal compound (C-2) having the following structure was prepared in the same manner as in Comparative Synthesis Example 3 of Korean Patent Publication No. 10-2022-0067494.

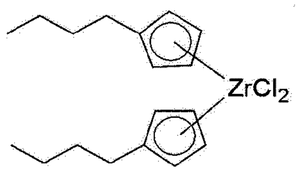

(C-2)

**Synthesis Example 9**

A transition metal compound (C-3) having the following structure was prepared in the same manner as in Preparation Example 1 of Korean Patent Publication No. 10-2016-0067508.

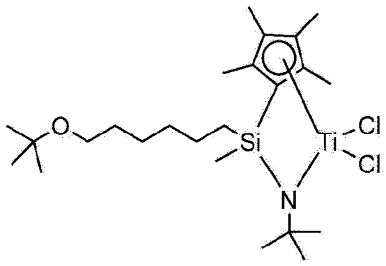

(C-3)

**<Preparation of Hybrid Metallocene Catalyst>**

**Preparation Example 1**

2.0 kg of toluene and 1000 g of silica (SP2410, manufactured by Grace Davision) were introduced into a 20 L sus high pressure reactor, and stirred while raising the reactor temperature to 40°C. 5.4 kg of methylaluminoxane (10 wt% in toluene, manufactured by Albemarle) was introduced into the reactor, and the temperature was raised to 70°C, followed by stirring at about 200 rpm for about 12 hours. Thereafter, the temperature of the reactor was lowered to 40°C, and stirring was stopped. The reaction product was allowed to settle for about 10 minutes, followed by decantation. 2.0 kg of toluene was added to the reaction product, and stirred for about 10 minutes, the stirring was stopped, and then the solution was allowed to settle for about 30 minutes, followed by decantation.

To the reactor, 2.0 kg of toluene was introduced, and subsequently, the compound (A-1) (52.5 mmol) prepared in Synthesis Example 1 as the first transition metal compound and the compound (B-1) (17.5 mmol) prepared in Synthesis Example 4 as the second transition metal compound, and 1000 mL of toluene were introduced. The temperature of the reactor was raised to 85°C, followed by stirring for about 90 minutes.

Then, the temperature of the reactor was lowered to room temperature, and the stirring was stopped, and the reaction product was allowed to settle for about 30 minutes, followed by decantation of the reaction product. Subsequently, 3 kg of hexane was introduced into the reactor, and the hexane slurry solution was transferred to a 20 L filter dryer to filter the solution, and dried under reduced pressure at 50°C for about 4 hours to obtain 1.5 kg of a hybrid metallocene catalyst.

**Preparation Examples 2 to 4**

Each hybrid metallocene catalyst was prepared in the same manner as in Preparation Example 1, except that the type and mixing molar ratio of the first and second transition metal compounds were changed as shown in Table 1 below.

**Comparative Preparation Example 1**

A hybrid metallocene catalyst including bis(n-butylcyclopentadienyl)-zirconium dichloride (C-2) and t-butoxyhexylmethylsilyl (N-t-butylamido) (2,3,4,5-tetramethylcyclopentadienyl)-titanium dichloride (C-3) was prepared in the same manner as in Preparation Example 1 of Korean Patent Publication No. KR10-2016-0010351.

In the prepared hybrid metallocene compound, a loading amount of the first transition metal compound was 0.1 mmol/g· support, and a loading amount of the second transition metal compound was 0.1 mmol/g·support.

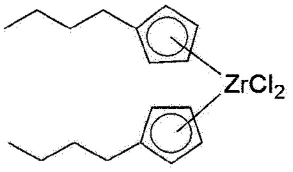
(C-2)

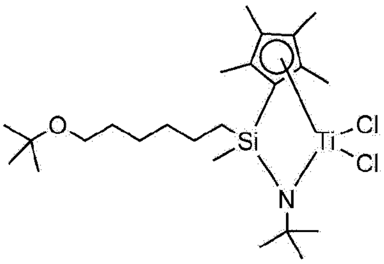
(C-3)

**Comparative Preparation Example 2**

A hybrid metallocene catalyst was prepared in the same manner as in Preparation Example 1, except that the type and mixing molar ratio of the first and second transition metal compounds were changed as shown in Table 1 below.

[Table 1]

| | First transition metal compound | Second transition metal compound | Input amounts of first/second transition metal compound (mmmol) |
|---|---|---|---|
| Preparation Example 1 | A-1 | B-1 | 52.5/17.5 |
| Preparation Example 2 | A-2 | B-1 | 52.5/17.5 |
| Preparation Example 3 | A-3 | B-2 | 52.5/17.5 |
| Preparation Example 4 | A-3 | B-3 | 52.5/17.5 |
| Comparative Preparation Example 1 | C-2 | C-3 | 100/100 |
| Comparative Preparation Example 2 | A-3 | C-1 | 52.5/17.5 |

**<Preparation of Polyethylene>**

**Examples 1 to 4 and Comparative Examples 1 to 2**

As a polymerization reactor, a 140 L continuous polymerization reactor operated at a reaction flow rate of about 7 m/s was prepared, in which an isobutene slurry loop process is possible. Further, in the reactor, reactants required for polyethylene polymerization as described in Table 2 were continuously introduced. As the catalyst used for each polymerization reaction, those prepared in Preparation Examples or Comparative Preparation Examples as described in Table 1 were used, and the catalyst was introduced after mixing with isobutene slurry. The polymerization reaction was conducted at a pressure of about 40 bar and a temperature of about 85°C.

Other main conditions of the polymerization reaction were described in Table 2.

[Table 2]

| | Catalyst | Input amount of ethylene (kg/hr) | Input amount of 1-Hexene[1] (wt%) | Input amount of hydrogen[2] (ppm) | Activity (kgPE/kg$SiO_2$·hr) |
|---|---|---|---|---|---|
| Example 1 | Preparation Example 1 | 21.1 | 9.5 | 16 | 1.8 |
| Example 2 | Preparation Example 2 | 20.1 | 14.6 | 24 | 4.9 |
| Example 3 | Preparation Example 3 | 24.2 | 5.6 | 10 | 4.7 |

(continued)

| | Catalyst | Input amount of ethylene (kg/hr) | Input amount of 1-Hexene[1] (wt%) | Input amount of hydrogen[2] (ppm) | Activity ($kgPE/kgSiO_2 \cdot hr$) |
|---|---|---|---|---|---|
| Example 4 | Preparation Example 4 | 20.0 | 11.5 | 10 | 3.2 |
| Comparative Example 1 | Comparative Preparation Example 1 | 19.5 | 10.8 | 30 | 2.5 |
| Comparative Example 2 | Comparative Preparation Example 2 | 20.1 | 10.9 | 7 | 2.4 |

In Table 2, activity ($kgPE/kgSiO_2 \cdot hr$) was calculated as a ratio of the weight (kg PE) of the produced polymer per weight (kg) of the supported catalyst used based on unit time (hr).

Further, the input amount (wt%) of 1-hexene is calculated as a percentage of the input amount of 1-hexene, based on the total weight of monomers including ethylene and 1-hexene, and the input amount (ppm) of hydrogen is based on the total weight of monomers including ethylene and 1-hexene.

**Experimental Example 1**

The physical properties of the polyethylenes prepared in Examples and Comparative Examples were measured as follows, and the results are shown in Table 3. For comparison, Exceed XP 8656 (manufactured by Exxonmobile Chemical), which is a commercially available polyethylene, was used as Comparative Example 3, and BO1801 (manufactured by DAELIM) as Comparative Example 4.

(1) Melt Index ($MI_{2.16}$): measured according to the ASTM D1238 (Condition E, 190°C, 2.16 kg load) standard.
(2) Density: measured according to the ASTM D1505 standard.
(3) SCBD characteristics

A cross fraction chromatography (CFC) analysis was performed on the polyethylenes prepared in Examples and Comparative Examples by the following method.

[Cross fraction chromatography (CFC) measurement conditions (including TREF and GPC analysis)]

- Analysis equipment: Polymer Char CFC - 7890B (G3440D)

(Detector: Integrated Detector IR5 MCT)

- Sample preparation and injection: 32 mg of each polyethylene prepared in Examples or Comparative Examples was put into a 10 mL vial and placed in an autosampler, 8 mL of 1,2,4-trichlorobenzene (TCB) was introduced, and dissolved at 160°C for 90 minutes, and stabilized at 140°C for 20 minutes. After nitrogen purging, the sample was extracted and loaded onto a temperature rising elution fractionation column (TREF column).
- Crystallization: the temperature of the sample previously loaded in the TREF column was set at 140°C, and cooled from 140°C to 35°C at a rate of 0.5 °C/min and maintained for 15 minutes.

The detailed conditions for stabilization and crystallization are as follows:

| **Heating / Cooling rate** | |
|---|---|
| Stabilization rate | 40 °C/min |

(continued)

| Heating / Cooling rate | |
|---|---|
| Stabilization temperature | 140 °C |
| Stabilization time | 20 min |
| Crystallization cooling rate | 0.5 °C/min |
| Crystallization temperature | 35 °C |
| Crystallization time | 15 min |

- Temperature rising elution fractionation (TREF) analysis: The sample previously crystallized was heated from 35°C to 120°C at a rate of 1°C/min until the fraction temperature below, then fixed, and the concentrations of the fractions eluted at that temperature for 5 minutes were measured. The TREF curve was derived from the results of measuring the concentrations.

From the TREF curve, a content ratio (<35°C) of a soluble fraction (SF) eluted in a region of an elution temperature of lower than 35°C, a content ratio (35~70°C) of a polymer fraction (M1) eluted in a region of an elution temperature of 35°C or higher and 70°C or lower, and a content ratio (>90°C) of a polymer fraction (M3) eluted in a region of an elution temperature of 90°C or higher were calculated (wt%), respectively.

<Fraction temperature>

35°C/40°C/43°C/46°C/49°C/52°C/55°C/58°C/61°C/64°C/67°C/70°C/73°C/76°C/79°C/82°C/85°C/88°C/91°C/94°C/97°C/100°C/105°C/120°C

<Measurement conditions>

| **Fraction elution condition** | |
|---|---|
| Elution time | 5 min |
| Analysis time | 15 min |
| Temperature rate (Heating) | 20 °C/min |
| Redissolution time | 5 min |
| **Cleaning condition** | |
| Temperature heating rate | 20 °C/min |
| Cleaning temperature | 150 °C |
| Cleaning time | 30 min |
| **Solvent control condition** | |
| Analysis pump rate | 1 mL/min |
| Cleaning TREF column Flow rate | 1 mL/min |
| Pump stabilization time | 30 min |
| Sample pick up flow rate | 3 mL/min |
| Sample pick up volume | 2.6 mL/min |
| Load loop flow rate | 1.25 mL/min |
| Load loop flow volume | 1.6 mL |
| Clean line flow rate | 4 mL/min |
| Clean line volume | 5 mL |

(continued)

| Solvent control condition | |
|---|---|
| Clean filter flow rate | 4 mL/min |
| Clean filter volume | 10 mL |
| Clean transfer line flow rate | 5 mL/min |
| Clean transfer line volume | 2.5 mL |
| Load TREF column flow rate | 0.2 mL/min |
| Load TREF at X mL from beginning | 1.0 mL |
| Solvent pick up flow rate | 15 mL/min |
| Vial filling flow rate | 5 mL/min |
| Delay volume | 9 mL |
| Acquisition volume | 18 mL |

- GPC analysis: the fractions eluted at each temperature in the previous TREF analysis were transferred to a GPC column of a GPC device (PL-GPC220), and then GPC analysis was performed under the following analysis conditions, and the molecular weights of the eluted molecules were measured. Further, the number of SCB (short-chain branches, chain branches having 2 to 7 carbon atoms per 1,000 carbon atoms) of the molecules eluted at each temperature was measured using a PerkinElmer Spectrum 100 FT-IR connected to the GPC device.

<Sample preparation>

The polyethylene was pretreated by dissolving in 1,2,4-trichlorobenzene at 160 °C for 10 hours, and prepared at a concentration of 10 mg/10 mL, and then was supplied in an amount of 200 μL.

<GPC analysis conditions>

GPC device: Waters PL-GPC220
GPC Column: Polymer Laboratories PLgel MIX-B 300 mm-length column
Measurement temperature: 160°C
Solvent: 1,2,4-trichlorobenzene
Flow rate: 1 mL/min
Standard specimen: polystyrene standard specimens
(Weight average molecular weights of polystyrene standard specimens: 9 kinds of 2000 g/mol, 10000 g/mol, 30000 g/mol, 70000 g/mol, 200000 g/mol, 700000 g/mol, 2000000 g/mol, 4000000 g/mol, and 10000000 g/mol)

<FT-IR analysis conditions>

Measurement device: PerkinElmer Spectrum 100
Measurement temperature: 160°C
Wavenumber: 2700 $cm^{-1}$ to 3000 $cm^{-1}$
Number of scanning: 16
Resolution: 8 $cm^{-1}$
Detector: DTGS

<Measurement conditions>

| GPC related condition | |
|---|---|
| CFC load column rate | 0.2 mL/min |
| CFC sample loaded x mL from col start | 1 mL |
| CFC solvent pick up rate | 15 mL/min |
| CFC vial filling rate | 8 mL/min |
| CFC pump stabilization time | 30 min |
| CFC elution time | 5 min |
| CFC delay volume | 0 |
| CFC acquisition volume | 40 mL |
| CFC analysis pump flow | 1 mL/min |
| CFC pick up sample rate | 3 mL/min |
| CFC pick up sample volume | 2.6 mL |
| CFC load loop rate | 1.25 mL/min |
| CFC load loop volume | 1.6 mL |
| CFC clean line rate | 5 mL/min |
| CFC clean line volume | 2 mL |
| CFC clean filter rate | 5 mL/min |
| CFC clean filter volume | 5 mL |
| CFC clean Tr line rate | 5 mL/min |
| CFC clean Tr line volume | 2 mL/min |

In detail, through the GPC analysis, a weight average molecular weight (Mw) ($M1_{Mw}$, g/mol) of a low crystalline polymer fraction (M1) eluted in a region of an elution temperature of 35°C or higher and 70°C or lower, a Mw ($M2_{Mw}$, g/mol) of a medium crystalline polymer fraction (M2) eluted in a region of an elution temperature of higher than 75°C and lower than 90°C, and a Mw ($M3_{Mw}$, g/mol) of a highly crystalline polymer fraction (M3) eluted in a region of an elution temperature of higher than 90°C or higher were measured, respectively. Further, from the measured results, a weight average molecular weight ratio ($M3_{Mw}/M1_{Mw}$) of the highly crystalline polymer fraction to Mw of the polymer fraction (M3) eluted in the region of the elution temperature of 90°C or higher to the weight average molecular weight of the low crystalline polymer fraction (M1) eluted in the region of 70°C or lower was calculated. The results are shown in Table 3 below and FIG. 1.

FIG. 1 shows a graph showing a relationship between the elution temperature (Te) (°C) and the weight average molecular weight (Mw) (g/mol) of each eluted polymer from the results of CFC analysis for the polyethylenes of Examples 1 to 4 and Comparative Examples 1 to 4, from which a molecular weight distribution according to the crystal distribution can be identified.

In addition, the measurement results were used to plot the elution temperature (Te) on the x-axis and the number of SCBs on the y-axis, and the plotted graph was subjected to curve fitting for a first-order linear relationship using a data analysis software (Origin Pro, 9.1). An absolute value of a slope in the resulting first-order linear relationship was taken as the SCB slope. The results are shown in Table 3 and FIGS. 2A and 2B below.

FIG. 2A shows a graph showing a relationship between the elution temperature (Te) (°C) and the number of SCB ($CH_3$/1,000C) from the results of CFC analysis for the polyethylenes of Examples 1 to 4, and FIG. 2B shows a graph showing a relationship between the elution temperature (Te) (°C) and the number of SCB ($CH_3$/1,000C) from the results of CFC analysis for the polyethylenes of Comparative Examples 1 to 4.

From FIGS. 2A and 2B, the SCB distribution according to the crystal distribution can be identified, and it was confirmed that Te and SCB have a linear relationship.

[Table 3]

| | Example 1 | Example 2 | Example 3 | Example 4 |
|---|---|---|---|---|
| MI (g/10min) | 1.0 | 1.0 | 1.0 | 1.0 |
| Density (g/cm$^3$) | 0.918 | 0.918 | 0.918 | 0.918 |

(continued)

| | | Example 1 | Example 2 | Example 3 | Example 4 |
|---|---|---|---|---|---|
| SCBD characteristic (Te vs SCB) | Absolute value of SCB slope (a) | 0.548 | 0.541 | 0.593 | 0.552 |
| Molecular weight characteristic (Te vs Mw) | $M1_{Mw}$ (g/mol) | 123,000 | 117,000 | 128,000 | 163,000 |
| | $M2_{Mw}$ (g/mol) | 98,000 | 97,000 | 107,000 | 86,000 |
| | $M3_{Mw}$ (g/mol) | 186,000 | 178,000 | 163,000 | 151,000 |
| | $M3_{Mw}/M1_{Mw}$ | 1.51 | 1.52 | 1.28 | 0.928 |

[Table 4]

| | | Comparative Example 1 | Comparative Example 2 | Comparative Example 3 | Comparative Example 4 |
|---|---|---|---|---|---|
| MI (g/10min) | | 1.0 | 1.0 | 0.5 | 1.0 |
| Density (g/cm$^3$) | | 0.918 | 0.918 | 0.916 | 0.918 |
| SCBD characteristic (Te vs SCB) | Absolute value of SCB slope (a) | 0.4989 | 0.485 | 0.6248 | 0.6277 |
| Molecular weight characteristic (Te vs Mw) | $M1_{Mw}$ (g/mol) | 134,000 | 75,000 | 263,000 | 146,000 |
| | $M2_{Mw}$ (g/mol) | 118,000 | 121,000 | 95,000 | 76,000 |
| | $M3_{MW}$ (g/mol) | 90,000 | 90,000 | 70,000 | 53,000 |
| | $M3_{MW}/M1_{MW}$ | 0.67 | 1.20 | 0.266 | 0.363 |

**Experimental Example 2**

Rheological properties of the polyethylenes prepared in Examples and Comparative Examples were measured, and then the results were used to analyze a relaxation time spectrum, and then a relaxation spectrum index (RSI) was obtained according to a method proposed by Wasserman (S,.H.Wassermna ANTEC 1997, 55, 1129).

Further, the results of measuring the rheological properties were used to obtain ER (Polydispersity at the High MW) and PDR (overall polydispersity) of the polyethylenes of Examples and Comparative Examples, respectively.

**(1) Sample preparation**

Each of the polyethylenes prepared in Examples and Comparative Examples was compression-molded at 182°C for 3 minutes to prepare each sample for measuring rheological properties.

In detail, the polyethylenes of Examples and Comparative Examples were melted by applying a pressure of 2 bar at 182°C for 1 minute, and then an additional pressure of 100 bar was applied for 2 minutes and quenched in a cooling press to prepare a press mold sample in the form of a disc with a thickness of 2 mm x a diameter of 25.4 mm.

Meanwhile, when the sample was prepared, 1500 ppm of an antioxidant (a weight ratio of Songnox 1076 (Songwon):Songnox 1680(Songwon)=1:2) and 300 ppm of a processing aid (3M Dynamar Polymer Processing Additive FX5929) were added and mixed, based on the total weight of polyethylene, and then extruded using a twin screw extruder (TEK 30 MHS, manufactured by SMPLATECH CO., (diameter of 32 pi, L/D=40) at an extrusion rate of 35 kg/hr at an extrusion temperature of 190°C and pelletized, in order to easily load the sample into the rheometer and to minimize sample deterioration or crosslinking during measurement since the polyethylenes of Examples 1 to 4 and Comparative Examples 1 and 2 had a powder form. However, no antioxidant was added to samples that can already contain antioxidants and processing aids during commercial pelletizing operations, such as the polyethylene in Comparative Example 3.

**(2) Measurement of rheological properties**

Storage modulus (G') and loss modulus (G") of the polyethylenes of Examples and Comparative Examples were measured respectively using a rotational rheometer (ARES-G2 Rheometer, manufactured by TA Instruments) in a

frequency sweep mode.

In detail, to minimize polyethylene decomposition, a test chamber of the rheometer was purged with nitrogen, and the rheometer was preheated to an initial temperature of 190°C. After sample loading and oven thermal equilibration, the sample prepared above was placed between parallel plates of the rheometer (plate diameter: 25.4 mm, gap between plates: 2 mm) and compressed to a thickness of 2.0 mm. A vacuum shear flow was applied at a strain rate of 5% over each frequency range of 0.05 rad/s to 500 rad/s under a nitrogen atmosphere. At this time, the strain was set within 5% to meet the linear viscoelasticity conditions. A total of 8 minutes elapsed between the time when the sample was inserted between the plates and the time when the frequency sweep (0.03-100 rad/s) was started, and the measurement was performed at 190°C. Meanwhile, a new sample was used at each temperature, and nitrogen ($N_2$) was circulated in the test chamber for each measurement.

Through the above measurements, the storage modulus (G') and loss modulus (G") for frequency ($\omega$) were obtained.

**(3) Relaxation time spectrum analysis**

Based on the results of measuring the rheological properties in (2), dynamic moduli ($G'(\omega)$ and $G''(\omega)$) were determined as a function of frequency ($\omega$), respectively.

$$G'(\omega) = \sum_{i}^{N} G_i \frac{(\omega\tau_i)^2}{1 + (\omega\tau_i)^2} \quad (3)$$

$$G''(\omega) = \sum_{i}^{N} G_i \frac{\omega\tau_i}{1 + (\omega\tau_i)^2} \quad (4)$$

in Equations (3) and (4), N represents the number of modes in the mode distribution of the relaxation time spectrum, $\omega$ represents frequency (rad/s), $\tau_i$ represents the discrete relaxation time (s), and $G_i$ represents the modulus (dyne/cm$^2$) corresponding to the relaxation time.

Further, the mode distribution of the relaxation spectrum was calculated using an IRIS rheological software (manufactured by IRIS Development), and then a first moment ($G_I$) and a second moment ($G_{II}$) of the distribution were calculated according to Equations below.

$$G_I = \sum_{i=1}^{N} G_i \Big/ \sum_{i=1}^{N} \frac{G_i}{\tau_i} \quad (i)$$

$$G_{II} = \sum_{i=1}^{N} G_i\tau_i \Big/ \sum_{i=1}^{N} G_i \quad (ii)$$

in Equations (i) and (ii), N represents the number of modes in the mode distribution of the relaxation time spectrum, $\tau i$ represents the relaxation time (s), and $G_i$ represents the modulus (dyne/cm$^2$) corresponding to the relaxation time.

The relaxation spectrum index (RSI) was obtained according to Equation 1 below using the $G_I$ and $G_{II}$ values calculated above.

[Equation 1]

$$RSI = \frac{G_{II}}{G_I}$$

Further, a weight average relaxation time ($\tau_w$) and a zero shear viscosity($\eta_0$) (Pa·s) were obtained according to Equation 2 and 3 below using the values measured above and the results of relaxation time spectrum analysis.

[Equation 2]

$$\tau_w = \frac{\sum_i^N G_i \tau_i^2}{\sum_i^N G_i \tau_i}$$

[Equation 3]

$$\eta_0 = \sum_i^N G_i \tau_i$$

in Equations 2 and 3, N represents the number of modes in the mode distribution of the relaxation time spectrum, $\tau i$ represents the relaxation time (s), and $G_i$ represents the modulus (dyne/$cm^2$) corresponding to the relaxation time.

In addition, based on the above measurement results, a relaxation time spectrum graph was derived with the relaxation time ($\tau$) on the x-axis and $\tau H(\tau)/\eta_0$ on the y-axis, which was normalized by dividing the continuous data of the relaxation time spectrum by $\eta_0$, and then subjected to deconvolution to obtain a crystal distribution, a relaxation time spectrum Max and FWHM (Full width at half-maximum). Further, the area ratio (peak area between $1s \leq \tau \leq 10s$/total peak area) was obtained. In this regard, the peak area between $1s \leq \tau \leq 10s$ and the total peak area were each obtained through integration.

FIG. 3 shows a plot of relaxation time spectra of the polyethylenes of Examples 1 to 4 and Comparative Examples 1 to 4, measured using a rotational rheometer. Further, FIGS. 4 to 11 show deconvolution plots of the relaxation time spectra of Examples 1 to 4 and Comparative Examples 1 to 4 of FIG. 3, respectively. In this regard, the deconvolution was performed using a peak analyzer of origin program (Origin 2022 version) according to Guaussian+Lorentzan method (P.Yu, Spectroscopy 20(2006), 229-251).

**(4) ER and PDR Measurement**

ER (Polydispersity at the High MW) and PDR (overall polydispersity) of the polyethylenes of Examples and Comparative Examples were obtained respectively using the results of measuring the rheological properties of (2) according to a method described in a literature "New measures of polydispersity from rheological data on polymer melts", Journal of Appied Polymer Science, vol. 57, 1605~1626(1995).

In detail, log(G") and log(G') were respectively plotted on the x-axis and the y-axis using the storage modulus (G') and the loss modulus (G") obtained from the measurement results of (2), and the plotted graph was subjected to curve fitting using a data analysis software (Origin Pro). As a result, a linear relationship (5) below was obtained.

$$\log G' = k_1 + k_2 \log G'' \quad (5)$$

in Equation, $k_1$ and $k_2$ are each constants for curve fitting.

Next, as shown in Equation 7 below, ER was obtained by interpolating the G' value corresponding to G"ref.

[Equation 7]

$$ER = C_1 G' |_{at\ G''_{ref}}$$

in Equation 7,

$C_1$ represents a constant $1.781 \times 10^{-3}$,
G' represents a storage modulus (dyne/$cm^2$) of the polyethylene, and
G"ref represents a loss modulus, 5000 dyne/$cm^2$ of the polyethylene, which is a small modulus value corresponding to a low frequency region.

When the lowest G" value is larger than 5000 dyne/$cm^2$, extrapolation was performed to obtain ER.

In addition, PDR (Overall Polydispersity) was calculated according to Equation 8 below.

[Equation 8]

$$PDR = \frac{\eta_1^*}{\eta_3^*} \cdot \frac{(\eta_1^* \cdot \eta_3^*)^{1/2}}{\eta_2^*}$$

in Equation 8, $\eta^*_1$, $\eta^*_2$, and $\eta^*_3$ each represent a complex viscosity at reference complex moduli, $G^*_{ref1}$, $G^*_{ref2}$, and $G^*_{ref3}$. $\eta^*_1$, $\eta^*_2$, and $\eta^*_3$ were obtained, based on $G^*_{ref1}=1.95\times10^4$ dyn/$cm^2$, $G^*_{ref2} = (G^*_{ref1}G^*_{ref3})^{1/2}$, and $\log10(G^*_{ref3} / G^*_{ref1})=2$ for a linear polymer.

In addition, the complex viscosity ($\eta^*$) was calculated using the results of measuring ARES according to Equation 10 below.

[Equation 10]

$$|\eta *| = \frac{\sqrt{(G'^2 + G''^2)}}{\omega}$$

in Equation 10, $\omega$ represents the frequency (rad/s), G' represents the storage modulus (dyne/$cm^2$), and G" represents the loss modulus (dyne/$cm^2$).

Meanwhile, FIG. 12 shows a graph showing a relationship between the loss modulus (G") and the storage modulus (G') for ER measurement, obtained from the results of measuring rheological properties of the polyethylenes of Examples 1 to 4 and Comparative Examples 1 to 4, and FIG. 13 shows a graph showing a relationship between the storage modulus (G') and the complex viscosity ($\eta^*$) for PDR measurement, obtained from the results of measuring rheological properties of the polyethylenes of Examples 1 to 4 and Comparative Examples 1 to 4.

[Table 5]

| | Example 1 | Example 2 | Example 3 | Example 4 |
|---|---|---|---|---|
| Crystal distribution type | bimodal | bimodal | bimodal | bimodal |
| RSI | 42.01 | 31.15 | 36.81 | 29.19 |
| $\tau_w$ (s) | 9.781 | 1.226 | 5.883 | 1.287 |
| $\eta_0$ (Pa·s) | 12,650 | 9,990 | 11,500 | 9,200 |
| Relaxation time(s) of maximum peak value in relaxation time spectrum | 0.131 | 0.098 | 0.131 | 0.174 |
| FWHM of peak at $1s\leq\tau\leq10s$ | 0.99 | 1.22 | 1.90 | 1.29 |
| Area ratio of peak at $1s\leq\tau\leq10s$ (%) | 14.2 | 26.0 | 35.0 | 23.4 |
| ER | 0.86 | 0.76 | 0.86 | 0.76 |
| PDR | 6.9 | 5.7 | 6.4 | 6.0 |

[Table 6]

| | Comparative Example 1 | Comparative Example 2 | Comparative Example 3 | Comparative Example 4 |
|---|---|---|---|---|
| Crystal distribution type | unimodal | bimodal | unimodal | unimodal |
| RSI | 16.16 | 15.43 | 48.54 | 22.67 |
| $\tau_w$ (s) | 0.568 | 0.378 | 1.161 | 0.659 |
| $\eta_0$ (Pa·s) | 7,200 | 7,300 | 16,700 | 7,700 |

(continued)

| | Comparative Example 1 | Comparative Example 2 | Comparative Example 3 | Comparative Example 4 |
|---|---|---|---|---|
| Relaxation time(s) of maximum peak value in relaxation time spectrum | 0.305 | 0.032 | 0.032 | 0.099 |
| FWHM of peak at 1s≤τ≤10s | 2.64 | 2.52 | ND | ND |
| Area ratio of peak at 1s≤τ≤10s (%) | 34.8 | 23.4 | ND | ND |
| ER | 0.22 | 0.13 | 0.47 | 0.32 |
| PDR | 2.5 | 2.2 | 7.4 | 4.6 |

In Tables, 'ND' means not detected.

**Experimental Example 3**

The crystal distribution characteristics of the polyethylenes prepared in Examples and Comparative Examples were evaluated through successive self-nucleation and annealing (SSA) analysis, and the results are shown in Table 5 below.

Each polyethylene was heated from 30°C to 180°C using a differential scanning calorimeter (device name: DSC8000, manufacturer: PerkinElmer), and then maintained at 180°C for 20 minutes to remove all thermal history of the sample before measurement.

Next, the temperature was cooled from 180°C to 140°C, maintained at 140°C for 20 minutes, and the temperature was lowered from 140°C to 30°C, and then maintained at 30°C for 1 minute, and then heated again. The polyethylene was heated to 135°C which is 5°C lower than the initial heating temperature of 140°C, and then maintained at 135°C for 20 minutes, cooled from 135°C to 30°C and then maintained at 30°C for 1 minute, then heated again. In this manner, the $n+1^{th}$ annealing temperature was 5°C lower than the $n^{th}$ annealing temperature, the holding time and cooling temperature were the same, and heating-annealing-cooling were repeated while gradually lowering the heating temperature until it reached 50°C. At this time, the temperature rise and drop rates were controlled to 20°C/min, respectively. Finally, the temperature was raised from 0°C to 180°C at a rate of 10°C/min, and a change in heat quantity was observed to measure a SSA thermogram.

The peak area was quantified using the Tm and heat quantity (area $S_i$) of each melting peak from the measured SSA thermogram. That is, for the total peak area ($f_1$+$f_2$+$f_3$) of the melting peaks in the SSA thermogram, the content ratios of each area, f2/f1, f3/f1, and f3/f2 were calculated using the areas of three regions $f_1$ (melting temperature of lower than 100°C), $f_2$ (melting temperature of 100°C or higher and 120°C or lower), and $f_3$ (melting temperature of higher than 120°C), respectively.

Meanwhile, the area of each peak was calculated through integration.

Further, the inhomogeneity (I) of the ethylene sequence was calculated according to Equation 6 below:

[Equation 6]

$$\text{Inhomogeneity (I)} = L_w / L_n$$

in Equation 6, $L_w$ represents a weighted average (unit: nm) of ethylene sequence length (ESL) and $L_n$ represents an arithmetic mean (unit: nm) of ESL.

The weighted average ($L_w$) and the arithmetic mean ($L_n$) of ethylene sequence of Equation 6 were calculated according to Equations 4 and 5 below:

[Equation 4]

$$L_n = \frac{S_1L_1 + S_2L_2 + S_3L_3 + \cdots + S_iL_i}{S_1 + S_2 + S_3 + \cdots + S_i} = \sum f_iL_i$$

[Equation 5]

$$L_w = \frac{S_1L_1^2 + S_2L_2^2 + S_3L_3^2 + \cdots + S_iL_i^2}{S_1L_1 + S_2L_2 + S_3L_3 + \cdots + S_iL_i} = \frac{\sum f_iL_i^2}{\sum f_iL_i}$$

in Equations 4 and 5,

$S_i$ represents the area of each melting peak measured in the SSA thermogram, and

$L_i$ represents the average ethylene sequence length (ASL) corresponding to each melting peak in the SSA thermogram.

Further, the ASL can be calculated from the measured SSA thermogram with reference to Journal of Polymer Science Part B: Polymer Physics. 2002, vol. 40, 813-821 and Journal of the Korean Chemical Society 2011, Vol. 55, No. 4.

[Table 7]

| | Example 1 | Example 2 | Example 3 | Example 4 | Comparative Example 1 | Comparative Example 2 | Comparative Example 3 | Comparative Example 4 |
|---|---|---|---|---|---|---|---|---|
| f1 | 0.3673 | 0.4015 | 0.4063 | 0.3790 | 0.3768 | 0.3400 | 0.3930 | 0.4394 |
| f2 | 0.3093 | 0.3158 | 0.3070 | 0.3353 | 0.4545 | 0.4200 | 0.1990 | 0.3533 |
| f3 | 0.3234 | 0.2827 | 0.2867 | 0.2858 | 0.1687 | 0.2400 | 0.4080 | 0.2073 |
| f2/f1 | 0.84 | 0.79 | 0.76 | 0.88 | 1.21 | 1.24 | 0.51 | 0.8 |
| f3/f1 | 0.88 | 0.70 | 0.71 | 0.75 | 0.45 | 0.71 | 1.04 | 0.47 |
| f3/f2 | 1.05 | 0.90 | 0.93 | 0.85 | 0.37 | 0.57 | 2.05 | 0.59 |
| Ln (nm) | 15.18 | 14.32 | 14.40 | 15.05 | 11.25 | 12.22 | 13.6 | 12.46 |
| Lw (nm) | 21.73 | 21.13 | 21.43 | 21.95 | 14.46 | 16.37 | 19.37 | 18.33 |
| I (=Lw/Ln) | 1.43 | 1.48 | 1.49 | 1.46 | 1.29 | 1.34 | 1.42 | 1.47 |

**Experimental Example 4**

To evaluate the processing characteristics of the polyethylenes prepared in Examples and Comparative Examples, head pressure, output, and output index were measured, respectively.

(1) Head pressure

When a polyethylene film was produced using a blown extruder, a pressurizer was installed in front of a die and a screen pack of the blown extruder to measure a head pressure (bar) of the polyethylene.

In detail, first, 1500 ppm of an antioxidant (weight ratio of Songnox 1076 (Songwon): Songnox 1680 (Songwon) = 1:2) and 300 ppm of 3M Dynamar Polymer Processing Additive FX5929, based on the total weight of polyethylene prepared in Examples or Comparative Examples, were added and mixed, and extruded at an extrusion rate of 35 kg/hr at an extrusion temperature of 190°C using a twin screw extruder (TEK 30 MHS, manufactured by SMPLATECH CO., diameter of 32 pi, L/D=40) to prepare about 18 kg of a composition for producing a pellet-like film.

The composition for producing a film prepared above was extruded using a single screw extruder (Eugene Engineering, Blown Film M/C, 50 pi, L/D=32) as a blown extruder at an extrusion temperature of 130°C to 180°C to produce a film while adjusting a take-off speed from 8 m/min to 10 m/min to achieve a final thickness of 50 μm. At this time, a die gap was 2.0 mm, a die diameter was 120 mm, and a blown-up ratio was 2.5.

The laboratory-scale blown film production line had a die diameter of 120 mm and a die gap of 1.5 mm (0.060 inches) in the extruder, and a 50-pi diameter barrel screw and a mixer at the end of the screw. The composition was extruded at a screw speed of 40 rpm, and a frost line height (FLH) was 200 mm to 250 mm, the barrel and die set

temperature was 170°C, and the melting temperature was 185°C to 190°C. Cooling was performed at 20°C using a dual lip air-ring. These specific processing conditions were chosen because properties of the film thus obtained are representative of those obtained under larger commercial scale film blowing conditions.

During blown film production under the above conditions, the head pressure (bar) was measured using a pressurizer installed in front of the die and the screen pack of the blown extruder.

(2) Output

Further, the film production process was performed in the same manner as above, but the screw speed in the blown extruder was fixed at 40 rpm, the take-off speed was adjusted to the film thickness of 50 μm, and when reaching the steady state, the output (g/min) discharged for 1 minute from the blown extruder was measured.

(3) Output Index

An output index g/(min·bar) was calculated using the results of measuring the head pressure and the output in (1) and (2) according to Equation 9 below.

Output Index = Output (g/min) discharged from blown extruder for 1 minute/Head pressure (bar) [Equation 9]

[Table 8]

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Head pressure (bar) | 240 | 222 | 251 | 241 | 284 | 290 | 295 | 250 |
| Output (g/min) | 393 | 410 | 428 | 433 | 393 | 416 | 398 | 405 |
| Output index (g/(min·bar)) | 1.64 | 1.85 | 1.71 | 1.80 | 1.38 | 1.43 | 1.35 | 1.62 |

**Experimental Example 5**

Films were produced using the polyethylenes prepared in Examples and Comparative Examples, respectively, and dart drop impact strength and haze were measured.

(1) Film production

1500 ppm of an antioxidant (weight ratio of Songnox 1076 (Songwon): Songnox 1680 (Songwon) = 1:2) and 300 ppm of 3M Dynamar Polymer Processing Additive FX5929, based on the total weight of polyethylene prepared in Example or Comparative Example, were added and mixed, and extruded at an extrusion rate of 35 kg/hr at an extrusion temperature of 190°C using a twin screw extruder (TEK 30 MHS, manufactured by SMPLATECH CO., diameter of 32 pi, L/D=40) to prepare about 18 kg of a composition for producing a pellet-like film.

The composition for producing a film prepared as above was inflation-molded under the following film extrusion conditions to produce a film.

<Film molding conditions>

Single Screw Extruder (YOOJIN ENGINEERING, Blown Film M/C, 50 pi, L/D=32)

Melting temperature (or extrusion temperature): 185°C

Die Gap: 2.0 mm

Die diameter: 120 mm

Blown-Up Ratio: 2.5

Frost Line Height: maintained at 200 mm to 250 mm

Sample output: 300 g/min to 500 g/min

Cooling: dual air-ring was used

Film thickness: 50 μm

(2) Dart drop impact strength

For each of the polyethylene films of Examples and Comparative Examples as produced above, the dart drop impact strength was measured according to the ASTM D1709 [Method A] standard, which was repeated 5 sets (20 times/1 set) for each film sample, and then the average value was taken.

(3) Haze

For the films with a thickness of 50 μm produced above, a haze of each film was measured according to the ISO 13468 standard.

[Table 9]

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Film physical properties (50 μm) | Dart drop impact strength (gf) | 1,900 | 1,900 | 1,950 | 2,100 | 1,100 | 1,200 | 2,100 | 1,900 |
| | Haze (%) | 12.4 | 9.8 | 12.4 | 13.5 | 16.5 | 20.18 | 21.7 | 16.2 |

As a result of the experiments, the films of Examples 1 to 4 showed the high impact strength and the significantly low haze, as compared to the films of Comparative Examples 1 to 4.

**Claims**

**1.** A polyethylene, wherein when the polyethylene is subjected to a temperature rising elution fractionation and a Fourier transform infrared spectroscopy, an absolute value of a slope in a first-order linear relationship y=ax+b which is derived from a change curve of a number of SCB (short chain branches) according to elution temperature is 0.5 to 0.6, and
a density is 0.916 g/cm$^3$ to 0.920 g/cm$^3$, as measured according to the ASTM D1505 standard.

**2.** The polyethylene of claim 1, satisfying the following requirements of (a1) to (a3), when subjected to the temperature rising elution fractionation analysis:

(a1) a weight average molecular weight (Mw) of a polymer fraction (M1) eluted at an elution temperature of 35°C to 70°C: 110,000 g/mol or more;
(a2) a weight average molecular weight (Mw) of a polymer fraction (M3) eluted at an elution temperature of 90°C or higher: 110,000 g/mol or more; and
(a3) a ratio of the weight average molecular weight of M3 to the weight average molecular weight of M1

($M3_{Mw}/M1_{Mw}$): 0.9 or more.

3. The polyethylene of claim 1, wherein when the polyethylene is subjected to a relaxation time spectrum analysis, the polyethylene exhibits a bimodal crystal distribution in a graph with a relaxation time ($\tau$) on the x-axis and $\tau H(\tau)/\eta_0$ on the y-axis.

4. The polyethylene of claim 1, wherein when the polyethylene is subjected to a relaxation time spectrum analysis, the polyethylene has a relaxation spectrum index (RSI) of 29 to 43, which is calculated according to Equation 1 below:

[Equation 1]

$$RSI = \frac{G_{II}}{G_I}$$

in Equation 1, $G_I$ and $G_{II}$ are calculated according to Equations (i) and (ii), respectively, below:

$$G_I = \sum_{i=1}^{N} G_i \Big/ \sum_{i=1}^{N} \frac{G_i}{\tau_i} \qquad (i)$$

$$G_{II} = \sum_{i=1}^{N} G_i \tau_i \Big/ \sum_{i=1}^{N} G_i \qquad (ii)$$

in Equations (i) and (ii), N represents a number of modes (numbers) in a mode distribution of the relaxation time spectrum, $G_i$ represents a modulus (dyne/$cm^2$) corresponding to a relaxation time, and $\tau_i$ represents a relaxation time (s).

5. The polyethylene of claim 1, wherein when the polyethylene is subjected to a relaxation time spectrum analysis, a weight average relaxation time ($\tau_w$) is 1.2 seconds to 10 seconds, and
a highest peak of the relaxation time spectrum exists at a relaxation time ($\tau$) of 0.05 sec to 1 sec.

6. The polyethylene of claim 1, wherein when the polyethylene is subjected to a relaxation time spectrum analysis, a FWHM (full width at half-maximum) of a peak at a relaxation time ($\tau$) of 1 sec to 10 sec is 0.95 to 2.0, and
a ratio of an area of the peak to a total peak area of the relaxation time spectrum (the area of the peak at a relaxation time of 1 sec to 10 sec/the total peak area of the relaxation time spectrum) is 14% to 40%.

7. The polyethylene of claim 1, wherein when the polyethylene is subjected to SSA (successive self-nucleation and annealing) analysis, the polyethylene satisfies the following requirements of (c1) to (c3):

(c1) f1(<100°C) (a ratio of a peak area at a melting temperature of lower than 100°C to a total peak area): 0.35 to 0.41;
(c2) f2(100-120°C) (a ratio of a peak area at a melting temperature of 100°C to 120°C to the total peak area): 0.30 to 0.38;
(c3) f3(>120°C) (a ratio of a peak area at a melting temperature of higher than 120°C to the total peak area): 0.24 to 0.33.

8. The polyethylene of claim 7, wherein when the polyethylene is subjected to SSA analysis, the polyethylene further satisfies the following requirements of (c4) to (c6):

(c4) f2/f1: 0.7 to 0.9;
(c5) f3/f1: 0.6 or more; and
(c6) f3/f2: 0.8 or more.

9. The polyethylene of claim 1, wherein when the polyethylene is subjected to SSA analysis, an inhomogeneity (I) of an ethylene sequence calculated according to Equation 6 below is from 1.4 to 1.5:

[Equation 6]

$$\text{Inhomogeneity (I)} = Lw / Ln$$

in Equation 6,
Lw represents a weighted average (unit: nm) of ESL (ethylene sequence length), and $L_n$ represents an arithmetic mean (unit: nm) of ESL.

10. The polyethylene of claim 9, wherein the Lw is from 15 nm to 30 nm, and the Ln is from 12 nm to 20 nm.

11. The polyethylene of claim 1, wherein the polyethylene has an ER (polydispersity at the High MW) of 0.7 or more, which is determined according to Equation 7 below:

[Equation 7]

$$ER = C_1 G' \,|_{\text{at } G''_{ref}}$$

in Equation 7,

$C_1$ represents a constant $1.781 \times 10^{-3}$,
G' represents a storage modulus (dyne/$cm^2$) of the polyethylene, and
G"ref represents a loss modulus, 5000 dyne/$cm^2$ of the polyethylene.

12. The polyethylene of claim 1, wherein the polyethylene has a PDR (overall polydispersity) of 5.0 or more, which is determined according to Equation 8 below:

[Equation 8]

$$PDR = \frac{\eta_1^*}{\eta_3^*} \cdot \frac{(\eta_1^* \cdot \eta_3^*)^{1/2}}{\eta_2^*}$$

in Equation 8, $\eta^*_1$, $\eta^*_2$, and $\eta^*_3$ each represent a complex viscosity at reference complex moduli, $G^*_{ref1}$, $G^*_{ref2}$, and $G^*_{ref3}$, which is calculated based on $G^*_{ref1}=1.95\times10^4$ dyn/$cm^2$, $G^*_{ref2}= (G^*_{ref1}G^*_{ref3})^{1/2}$, and $\log10(G^*_{ref3}/G^*_{ref1})=2$.

13. The polyethylene of claim 1, wherein the polyethylene has a head pressure of 210 bar to 260 bar.

14. The polyethylene of claim 1, wherein the polyethylene has an output index of 1.60 g/(min-bar) or more, which is calculated according to Equation 9 below:

Output Index = Output (g/min) discharged from blown extruder for 1 minute/Head pressure (bar) [Equation 9]

15. The polyethylene of claim 1, wherein the polyethylene has a melt index ($MI_{2.16}$) of 0.5 g/10min to 1.5 g/10min, as measured at a temperature of 190°C under a load of 2.16 kg according to the ASTM D1238 standard.

16. The polyethylene of claim 1, wherein the polyethylene is an ethylene/1-hexene copolymer.

17. A film comprising the polyethylene of claim 1.

18. The film of claim 17, wherein the film has a dart drop impact strength of 1900 gf or more, as measured according to the Method A of ASTM D 1709 under conditions of a BUR (Blown-Up Ratio) of 2.3 to 3 and a film thickness of 45 μm to 55

μm, and has a haze of 14% or less, as measured according to ISO 13468 standard.

【FIG. 1】

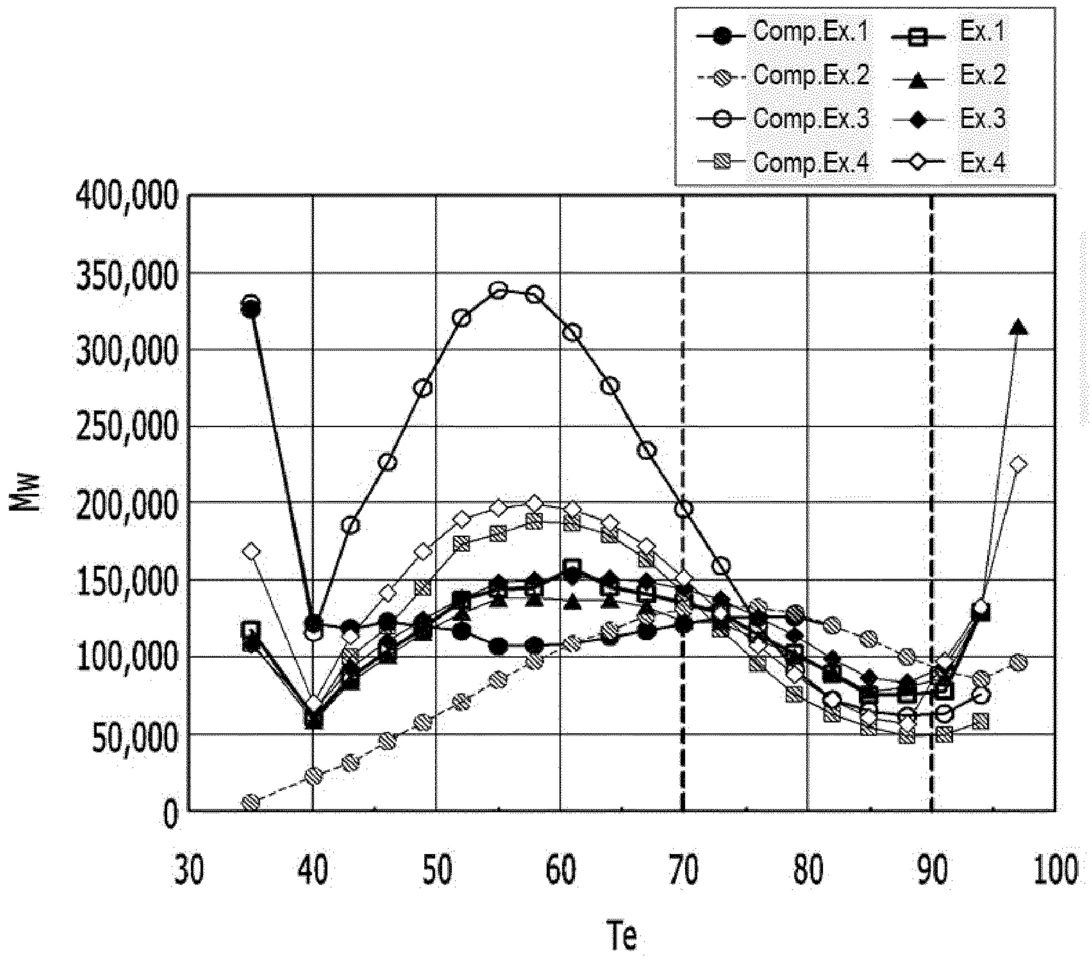
Comp.Ex.1
Comp.Ex.2
Comp.Ex.3
Comp.Ex.4
Ex.1
Ex.2
Ex.3
Ex.4
400,000
350,000
300,000
250,000
200,000
150,000
100,000
50,000
0
Mw
30
40
50
60
70
80
90
100
Te

【FIG. 2A】

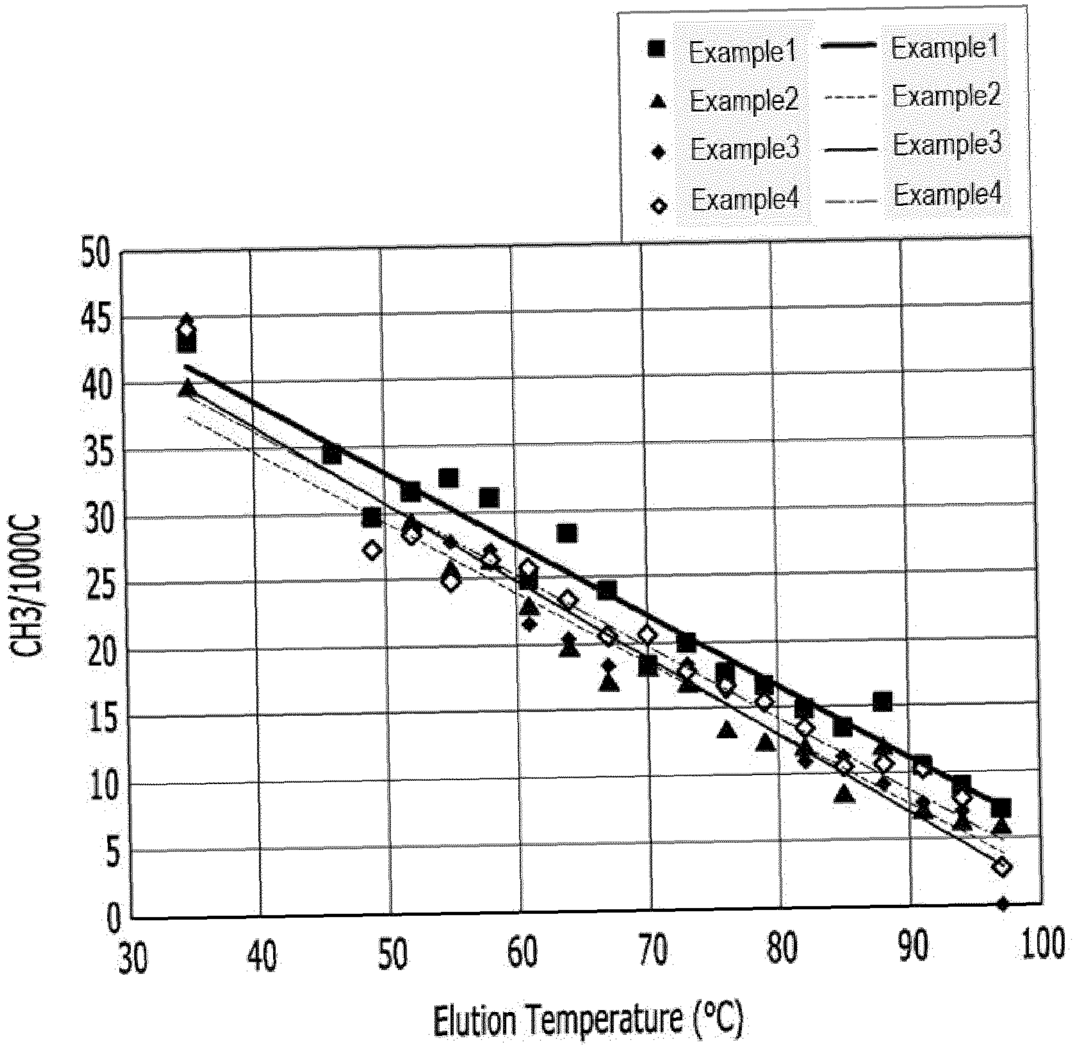
Example1
Example2
Example3
Example4
Example1
Example2
Example3
Example4
CH3/1000C
0
5
10
15
20
25
30
35
40
45
50
30
40
50
60
70
80
90
100
Elution Temperature (°C)

【FIG. 2B】

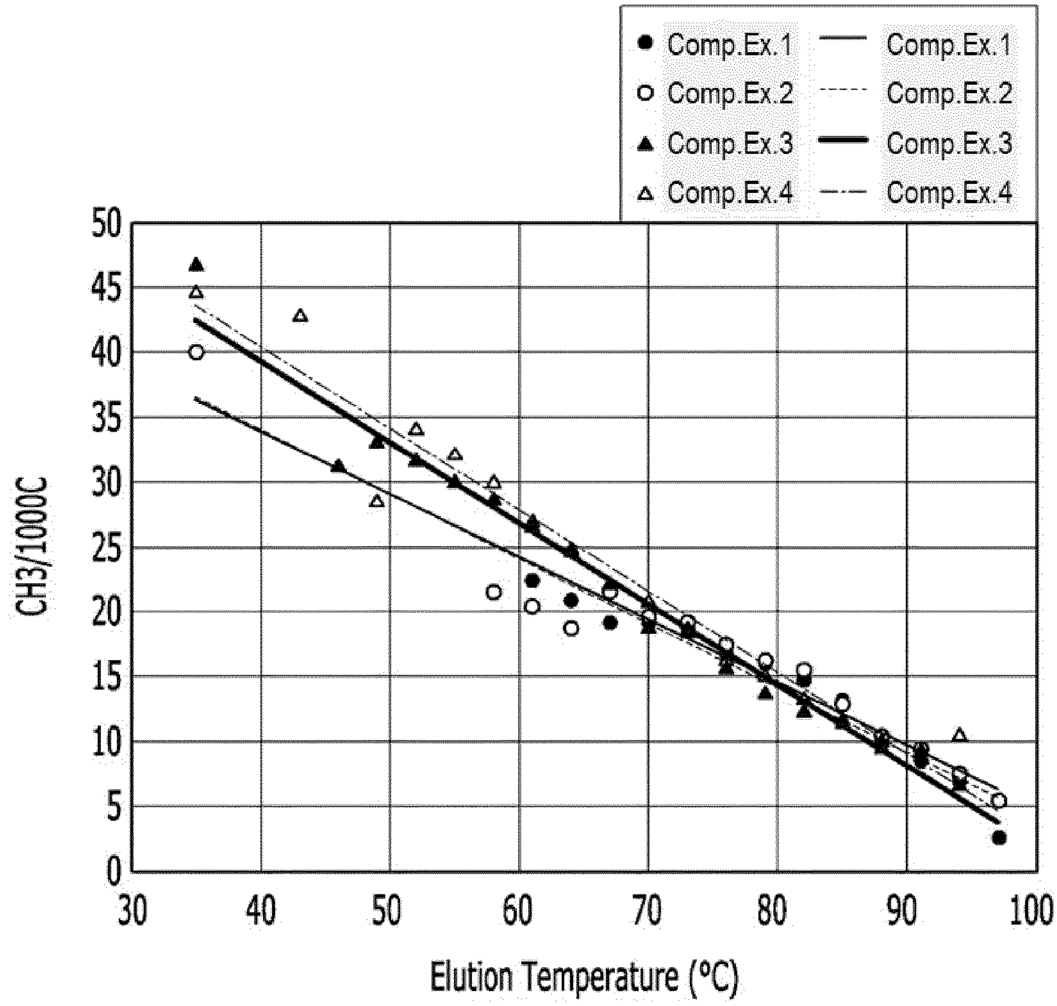
Comp.Ex.1
Comp.Ex.2
Comp.Ex.3
Comp.Ex.4
Comp.Ex.1
Comp.Ex.2
Comp.Ex.3
Comp.Ex.4
CH3/1000C
50
45
40
35
30
25
20
15
10
5
0
30
40
50
60
70
80
90
100
Elution Temperature (°C)

【FIG. 3】

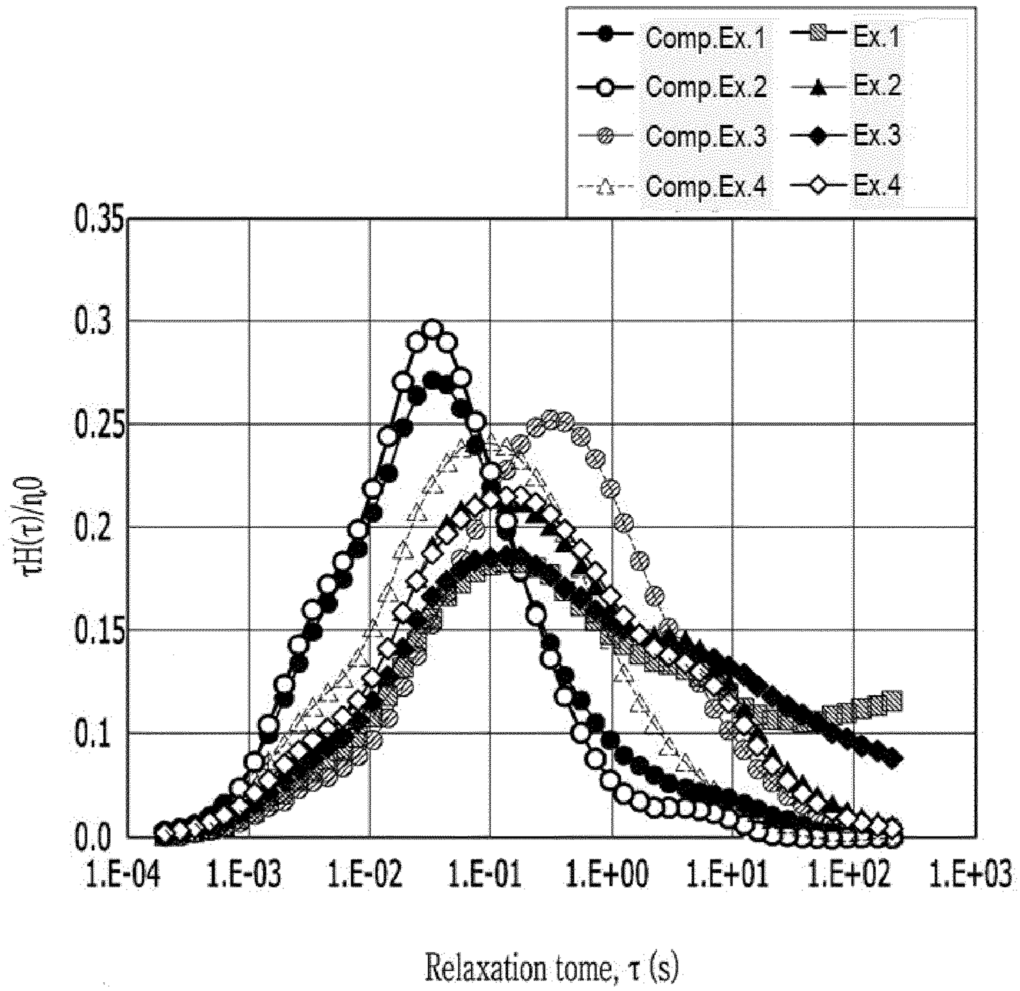
Comp.Ex.1
Comp.Ex.2
Comp.Ex.3
Comp.Ex.4
Ex.1
Ex.2
Ex.3
Ex.4
0.35
0.3
0.25
0.2
0.15
0.1
0.0
τH(τ)/η0
1.E-04
1.E-03
1.E-02
1.E-01
1.E+00
1.E+01
1.E+02
1.E+03
Relaxation tome, τ (s)

【FIG. 4】

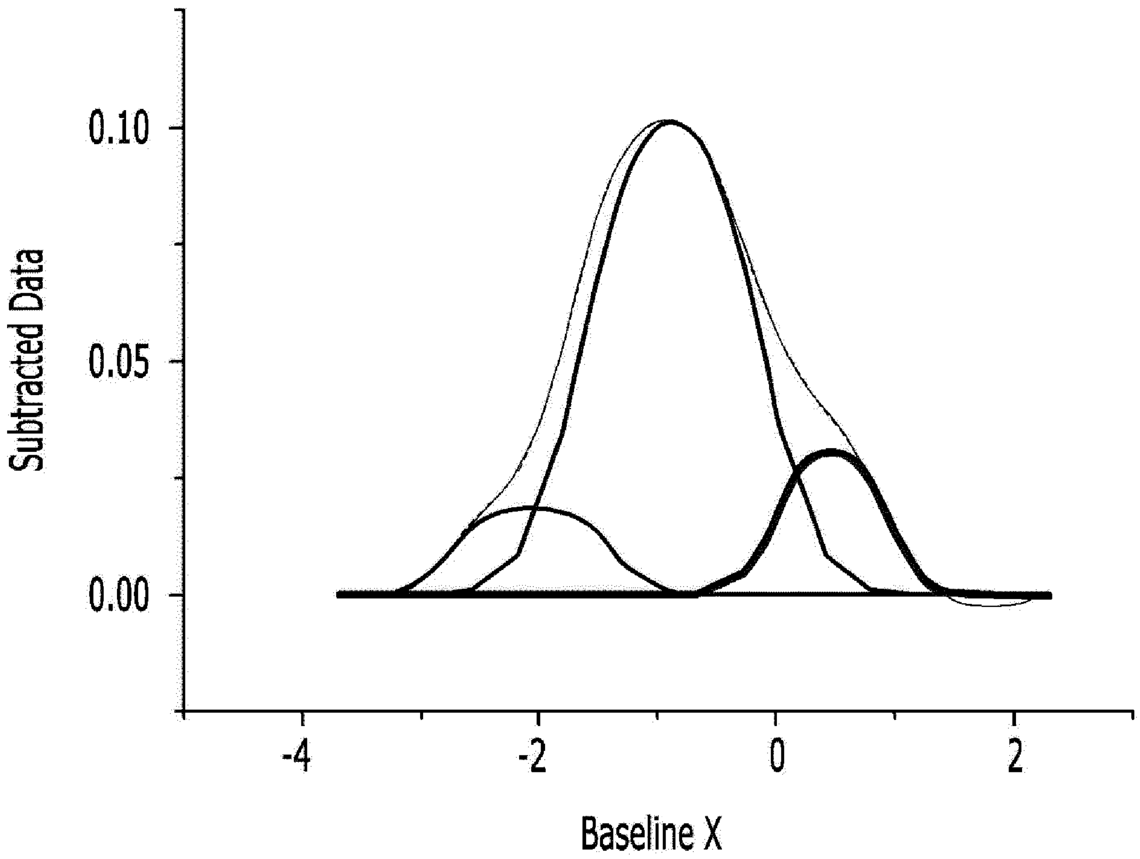

【FIG. 5】

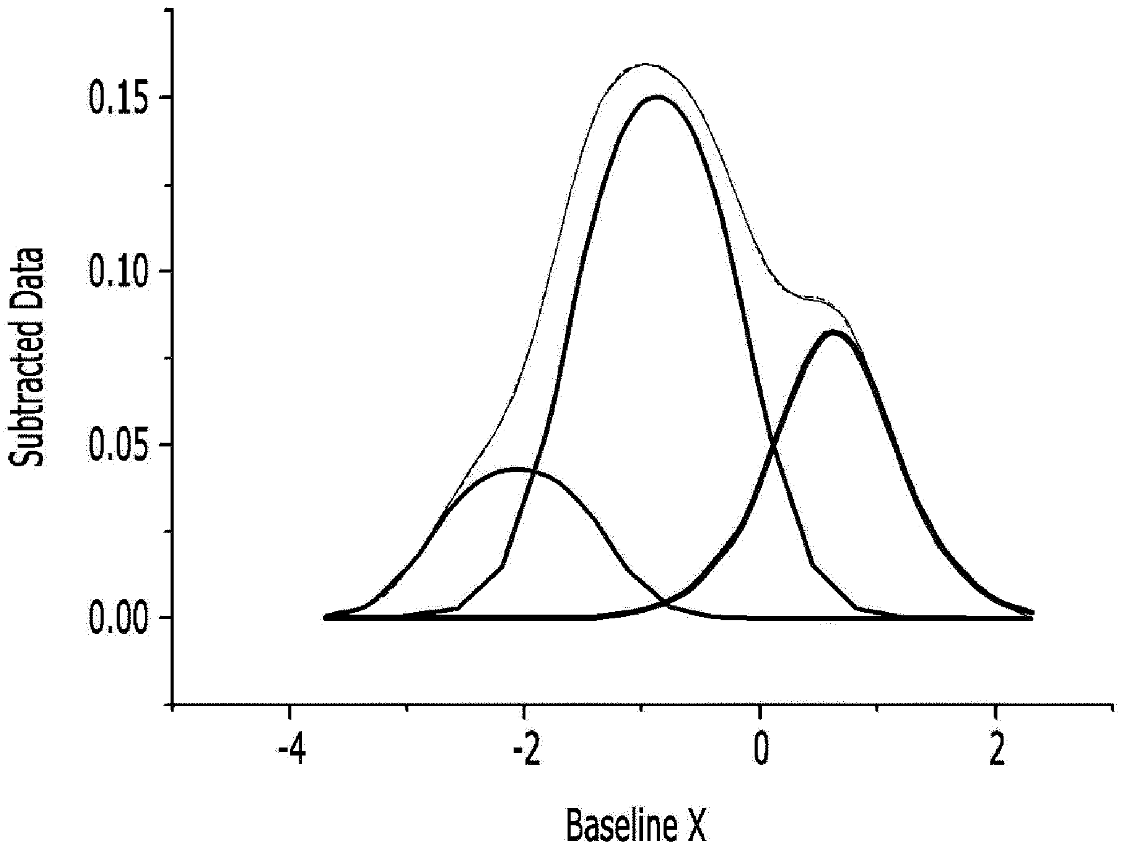

【FIG. 6】

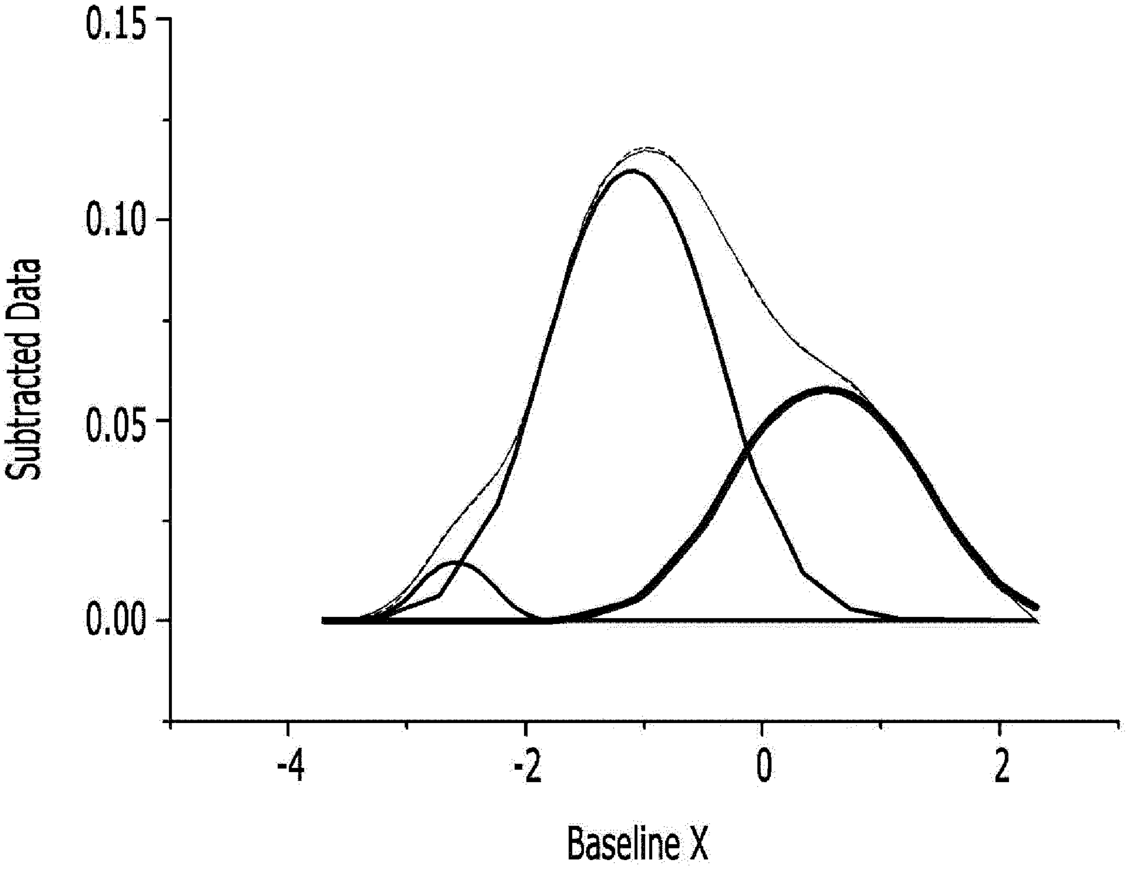

【FIG. 7】

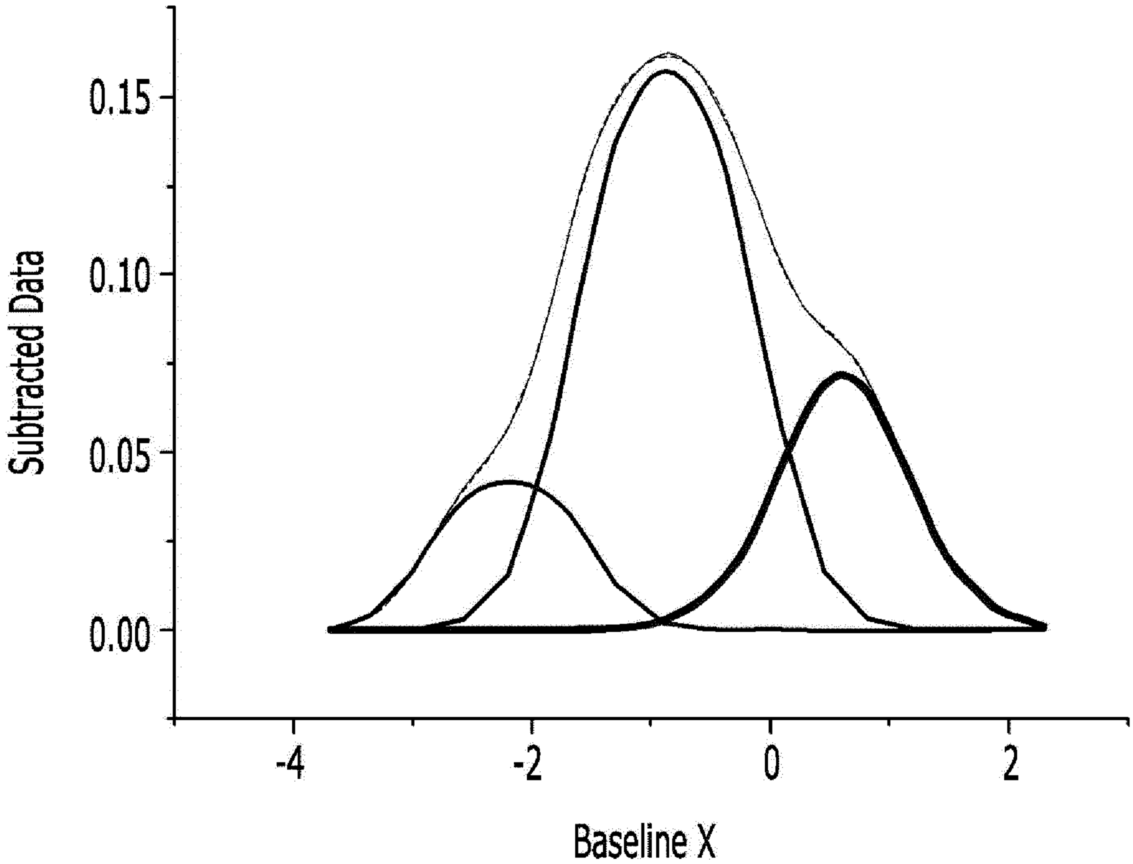

【FIG. 8】

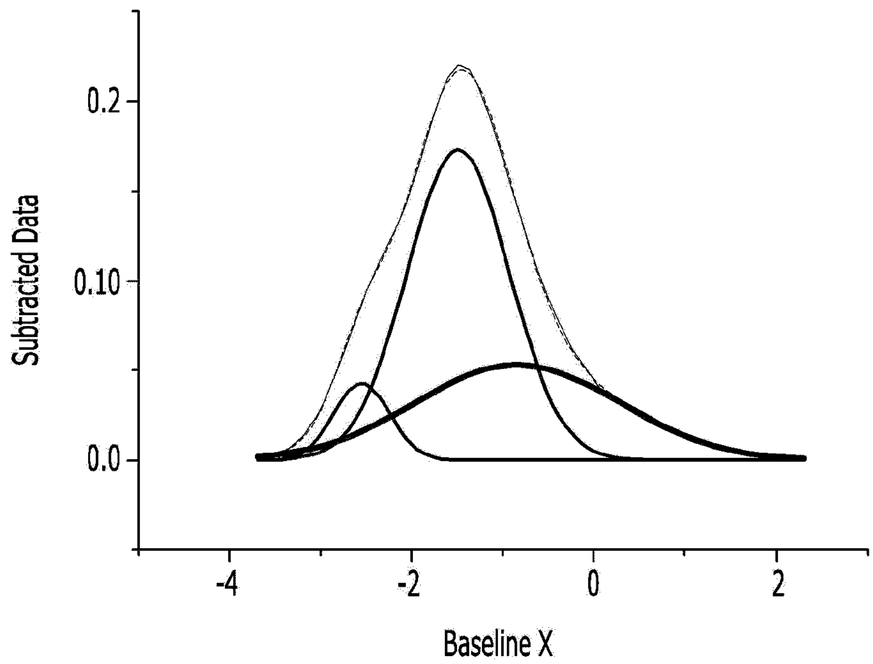

【FIG. 9】

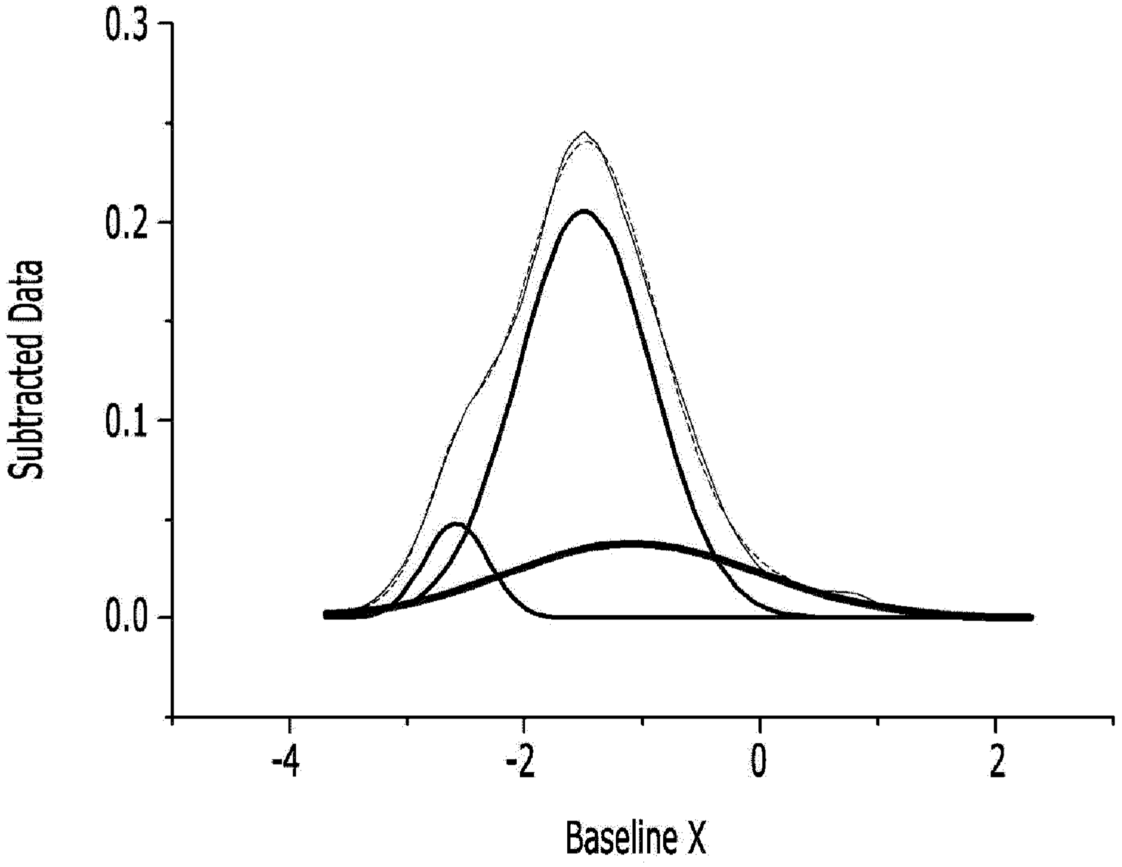

【FIG. 10】

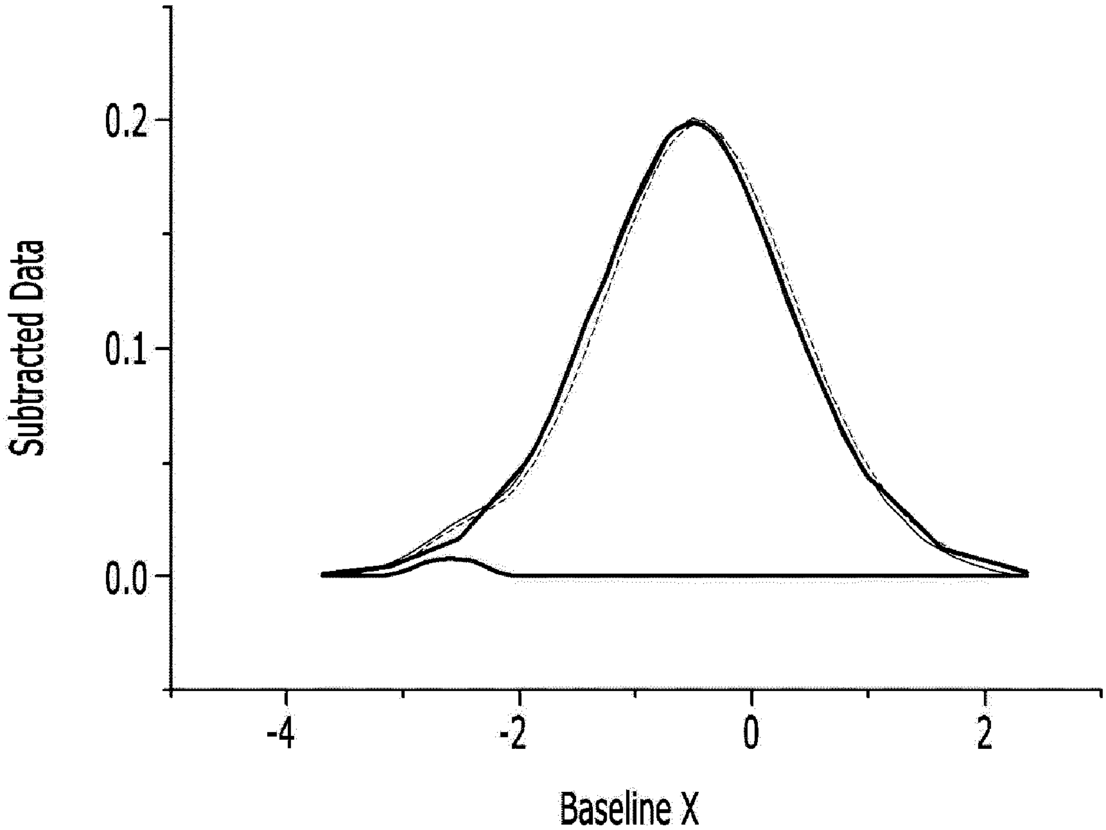

【FIG. 11】

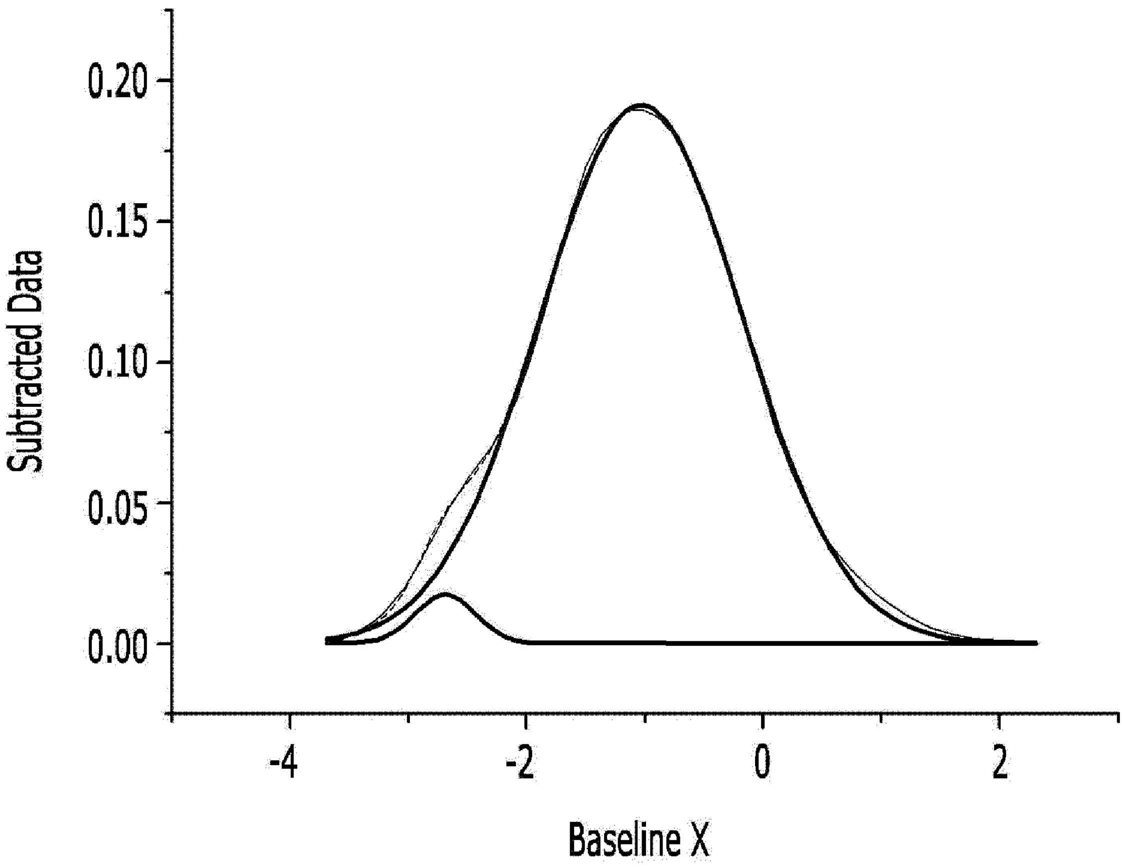

【FIG. 12】

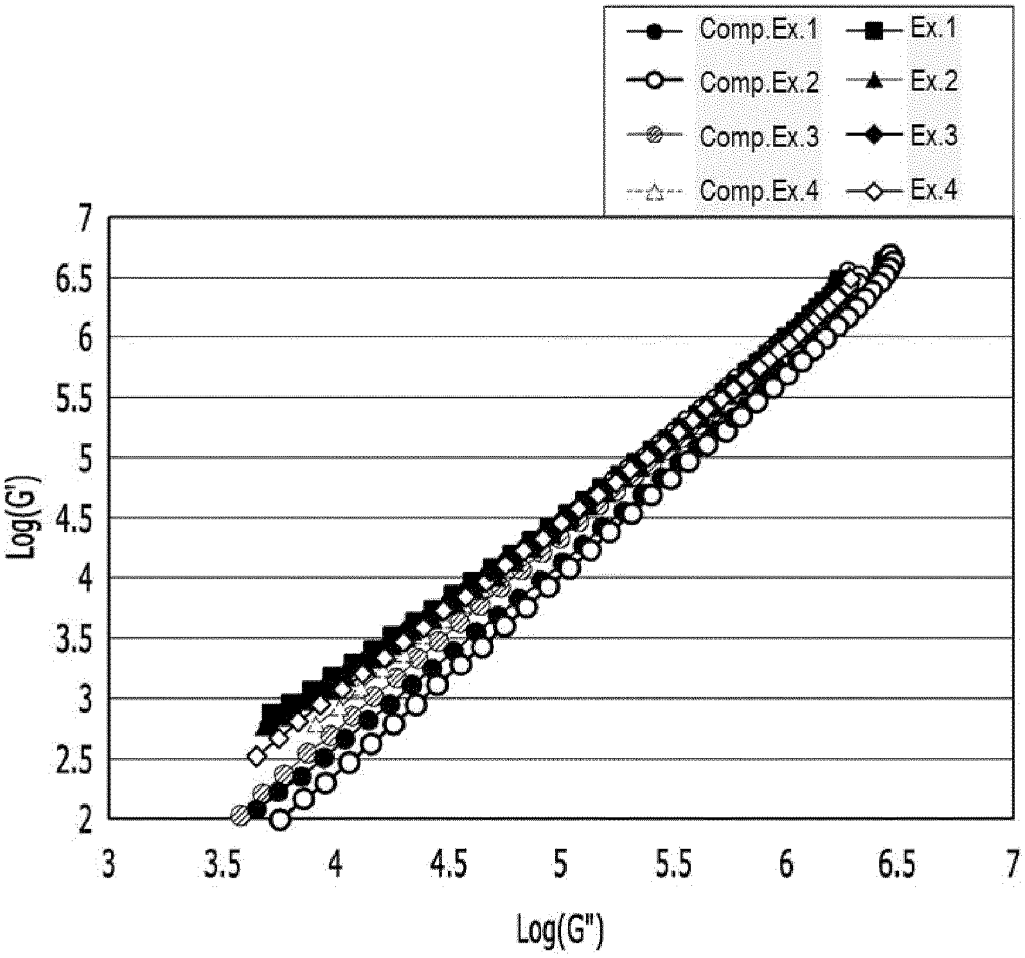
Comp.Ex.1
Ex.1
Comp.Ex.2
Ex.2
Comp.Ex.3
Ex.3
Comp.Ex.4
Ex.4
Log(G')
Log(G")
7
6.5
6
5.5
5
4.5
4
3.5
3
2.5
2
3
3.5
4
4.5
5
5.5
6
6.5
7

【FIG. 13】

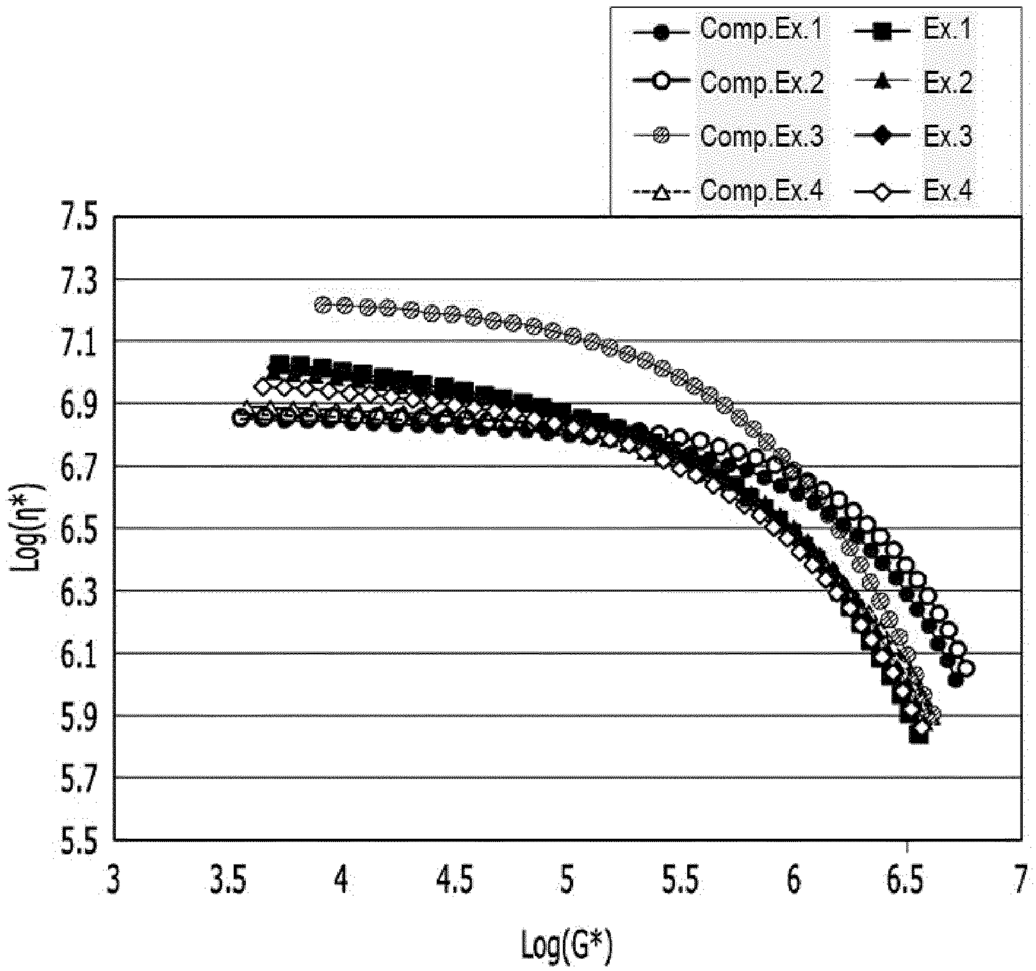

Comp.Ex.1
Ex.1
Comp.Ex.2
Ex.2
Comp.Ex.3
Ex.3
Comp.Ex.4
Ex.4
7.5
7.3
7.1
6.9
6.7
6.5
6.3
6.1
5.9
5.7
5.5
Log(η*)
3
3.5
4
4.5
5
5.5
6
6.5
7
Log(G*)

## INTERNATIONAL SEARCH REPORT

International application No. **PCT/KR2023/020733**

**A. CLASSIFICATION OF SUBJECT MATTER**

**C08F 210/16**(2006.01)i; **C08F 210/14**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 110/02(2006.01); C08F 2/01(2006.01); C08F 210/02(2006.01); C08F 210/14(2006.01); C08F 4/659(2006.01); C08F 4/6592(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 용리 온도(elution temperature), 단쇄분지(short chain branch), 밀도(density), 폴리에틸렌(polyethylene), 필름(film)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0043439 A (LG CHEM, LTD.) 21 April 2021 (2021-04-21)<br>See claims 1-11. | 1-18 |
| A | JP 2022-023676 A (ASAHI KASEI CORP.) 08 February 2022 (2022-02-08)<br>See entire document. | 1-18 |
| A | US 2005-0159300 A1 (JENSEN, M. D. et al.) 21 July 2005 (2005-07-21)<br>See entire document. | 1-18 |
| A | WO 2019-124792 A1 (LG CHEM. LTD.) 27 June 2019 (2019-06-27)<br>See entire document. | 1-18 |
| A | KR 10-2021-0038357 A (LG CHEM, LTD.) 07 April 2021 (2021-04-07)<br>See entire document. | 1-18 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 March 2024** | **26 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/020733**

| Patent document cited in search report | Publication date (day/month/year) | Patent family member(s) | Publication date (day/month/year) |
|---|---|---|---|
| KR 10-2021-0043439 A | 21 April 2021 | CN 113166321 A | 23 July 2021 |
| | | CN 113166321 B | 07 July 2023 |
| | | EP 3868798 A1 | 25 August 2021 |
| | | JP 2022-507188 A | 18 January 2022 |
| | | JP 7217070 B2 | 02 February 2023 |
| | | KR 10-2616697 B1 | 21 December 2023 |
| | | US 2022-0017665 A1 | 20 January 2022 |
| | | WO 2021-071154 A1 | 15 April 2021 |
| JP 2022-023676 A | 08 February 2022 | None | |
| US 2005-0159300 A1 | 21 July 2005 | AU 2005-206563 A1 | 04 August 2005 |
| | | AU 2005-206563 B2 | 16 December 2010 |
| | | AU 2010-246340 A1 | 09 December 2010 |
| | | AU 2010-246340 B2 | 26 July 2012 |
| | | BR PI0507047 A | 12 June 2007 |
| | | CA 2553993 A1 | 04 August 2005 |
| | | CA 2553993 C | 14 June 2011 |
| | | CA 2736014 A1 | 04 August 2005 |
| | | CA 2736014 C | 27 November 2012 |
| | | CN 100562532 C | 25 November 2009 |
| | | CN 101475654 A | 08 July 2009 |
| | | CN 101475654 B | 02 January 2013 |
| | | CN 1930196 A | 14 March 2007 |
| | | EG 26673 A | 13 May 2014 |
| | | EP 1706437 A1 | 04 October 2006 |
| | | EP 1706437 B1 | 20 January 2016 |
| | | ES 2563165 T3 | 11 March 2016 |
| | | JP 2007-518871 A | 12 July 2007 |
| | | JP 2011-140658 A | 21 July 2011 |
| | | JP 2014-210937 A | 13 November 2014 |
| | | JP 5623315 B2 | 12 November 2014 |
| | | JP 5952870 B2 | 13 July 2016 |
| | | MX PA06008322 A | 26 January 2007 |
| | | RU 2006129936 A | 27 February 2008 |
| | | RU 2382793 C2 | 27 February 2010 |
| | | SG 134326 A1 | 29 August 2007 |
| | | US 2006-0229420 A1 | 12 October 2006 |
| | | US 7119153 B2 | 10 October 2006 |
| | | US 7572875 B2 | 11 August 2009 |
| | | WO 2005-070977 A1 | 04 August 2005 |
| WO 2019-124792 A1 | 27 June 2019 | CN 111164111 A | 15 May 2020 |
| | | CN 111164111 B | 03 January 2023 |
| | | EP 3670544 A1 | 24 June 2020 |
| | | EP 3670544 B1 | 23 March 2022 |
| | | KR 10-2019-0074959 A | 28 June 2019 |
| | | KR 10-2248557 B1 | 06 May 2021 |
| | | US 11072670 B2 | 27 July 2021 |
| | | US 2020-0354488 A1 | 12 November 2020 |
| KR 10-2021-0038357 A | 07 April 2021 | CN 113166322 A | 23 July 2021 |
| | | CN 113166322 B | 17 November 2023 |
| | | CN 117384316 A | 12 January 2024 |

Form PCT/ISA/210 (patent family annex) (July 2022)

**INTERNATIONAL SEARCH REPORT**
**Information on patent family members**

International application No.
**PCT/KR2023/020733**

| Patent document cited in search report | Publication date (day/month/year) | Patent family member(s) | Publication date (day/month/year) |
|---|---|---|---|
| | | EP 3872102 A1 | 01 September 2021 |
| | | JP 2022-507058 A | 18 January 2022 |
| | | JP 7134553 B2 | 12 September 2022 |
| | | US 2022-0017667 A1 | 20 January 2022 |
| | | WO 2021-066437 A1 | 08 April 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220176237
- KR 1020230181010
- KR 1020220067494
- KR 1020160067508
- KR 1020160010351

### Non-patent literature cited in the description


- **J. M. DEALY** ; **K. F. WISSBRUN**. Melt Rheology and Its Role in Plastics Processing. Van Nostrand Reinhold, 1990, 269-297
- **SEUNGJOON PARK et al.** *The Korean J. of Rheology*, 1996, vol. 8, 103-118
- **S,.H.WASSERMNA**. *ANTEC*, 1997, vol. 55, 1129
- *Journal of Polymer Science Part B: Polymer Physics.*, 2002, vol. 40, 813-821
- *Journal of the Korean Chemical Society*, 2011, vol. 55 (4)
- New measures of polydispersity from rheological data on polymer melts. *Journal of Applied Polymer Science*, 1995, vol. 57, 1605-1626
- **P.YU**. *Spectroscopy*, 2006, vol. 20, 229-251
- New measures of polydispersity from rheological data on polymer melts. *Journal of Appied Polymer Science*, 1995, vol. 57, 1605-1626
- *Journal of Polymer Science Part B: Polymer Physics*, 2002, vol. 40, 813-821